# EUROPEAN PATENT APPLICATION

(11) **EP 4 848 653 A1**
(43) Date of publication of application: **02.12.2026**
(21) Application number: 25195539.9
(22) Date of filing: 12.08.2025
(51) Int. Cl.: H04L 9/30, H04L 9/32

(54) **HARDWARE ARCHITECTURE FOR LOW-POWER IMPROVED DILITHIUM DIGITAL SIGNATURE ALGORITHM FOR DATA SECURITY**

(30) Priority: 27.05.2025 US 202519219382
(71) Applicant: Samsung Electronics Co., Ltd., Suwon-si, Gyeonggi-do 16677 (KR)
(72) Inventor: BERMAN, Amit, 16677 Suwon-si (KR); DOUBCHAK, Ariel, 16677 Suwon-si (KR); LIVNE, Noam, 16677 Suwon-si (KR)
(74) Representative: Marks & Clerk LLP

(57) **Abstract**

In accordance with an aspect of the disclosure, a method of controlling a storage device includes: obtaining input information to be signed using a public key associated with a private key, wherein the public key corresponds to a public key matrix and a public key vector, and wherein the private key corresponds to a first private key vector and a second private key vector; calculating a first intermediate vector based on the public key matrix and a masking vector; calculating a challenge value based on the input information and the first intermediate vector; calculating a signature vector and a hint vector corresponding to the challenge value; calculating a second intermediate vector by multiplying the second private key vector by the challenge value; calculating a third intermediate vector by multiplying the public key vector by the challenge value; calculating a verification vector based on the first intermediate vector, the second intermediate vector, and the third intermediate vector; determining whether the hint vector is valid based on a plurality of difference values obtained by subtracting a plurality of first coefficients included in the third intermediate vector from a plurality of second coefficients included in the verification vector; and based on determining that the hint vector is valid, storing the input information and a signature corresponding to the signature vector and the challenge value in a memory of the storage device.

## Description

### BACKGROUND

### 1. Field

The present disclosure relates to storage devices including digital signature schemes, and more particularly to a hardware architecture for an improved Dilithium digital signature algorithm.

### 2. Description of Related Art

Digital signature schemes may be mathematical schemes for verifying the authenticity of digital data or messages, for example using asymmetric cryptography. Digital signature schemes may be implemented using, for example, a key generation procedure that may be used to generate a private key and a corresponding public key, a signing procedure that may be used to generate a signature corresponding to input data based on the private key, and a verification procedure that may be used to authenticate the input data using the public key and the signature.

Digital signature schemes are important tools for ensuring the security, integrity, and authenticity of digital messages and data. One example of a digital signature scheme is Cryptographic Suite for Algebraic Lattices (CRYSTALS)-Dilithium (also referred to herein as "Dilithium").

Many digital signature schemes rely on complex mathematical problems that are considered computationally infeasible to solve with traditional computers, but which may be solved much more easily with quantum computers, which means that the security provided by these schemes may soon be reduced or eliminated. Unlike these schemes, Dilithium relies on the hardness of lattice problems over module lattices, which may not be easily solved by quantum computers. As a result, Dilithium and other quantum-resistant cryptographic algorithms are expected to become very important as the use of quantum computing becomes more common.

In the Dilithium digital signature scheme, there is a tradeoff between the length of the public key and the length of the signature. The coefficients of a portion of the public key are compressed in a lossy manner, or quantized, during the key generation procedure, in order to reduce size of the public key. In particular, these coefficients may be divided by some fixed denominator, and only the quotients are published. However, this may result in some skew during the verification process, and to address this, a special signature-dependent hint may be computed during the signing procedure. As part of the signing procedure, a test may be performed to check whether a proper hint can indeed be generated to fix this skew, and if the test fails, the signing procedure may be rerun.

In some implementations of the Dilithium digital signature scheme, the test is not performed optimally. For example, the test may be performed according to a condition that is sufficient for the hint to work, but not necessary. As a result, these Dilithium implementations may result in resource costs and time costs which are higher than necessary, and may require hardware that is more complicated or expensive than necessary.

### SUMMARY

In accordance with an aspect of the disclosure, a method of controlling a storage device includes: obtaining input information to be signed using a public key associated with a private key, wherein the public key corresponds to a public key matrix and a public key vector, and wherein the private key corresponds to a first private key vector and a second private key vector; calculating a first intermediate vector based on the public key matrix and a masking vector; calculating a challenge value based on the input information and the first intermediate vector; calculating a signature vector and a hint vector corresponding to the challenge value; calculating a second intermediate vector by multiplying the second private key vector by the challenge value; calculating a third intermediate vector by multiplying the public key vector by the challenge value; calculating a verification vector based on the first intermediate vector, the second intermediate vector, and the third intermediate vector; determining whether the hint vector is valid based on a plurality of difference values obtained by subtracting a plurality of first coefficients included in the third intermediate vector from a plurality of second coefficients included in the verification vector; and based on determining that the hint vector is valid, storing the input information and a signature corresponding to the signature vector and the challenge value in a memory of the storage device.

In accordance with an aspect of the disclosure, a storage device includes: a memory; and a storage controller including a security module, wherein the storage controller is configured to: obtain input information to be signed using a public key associated with a private key, wherein the public key corresponds to a public key matrix and a public key vector, and wherein the private key corresponds to a first private key vector and a second private key vector; calculate a first intermediate vector based on the public key matrix and a masking vector; calculate a challenge value based on the input information and the first intermediate vector; calculate a signature vector and a hint vector corresponding to the challenge value; calculate a second intermediate vector by multiplying the second private key vector by the challenge value, calculate a third intermediate vector by multiplying the public key vector by the challenge value, calculate a verification vector based on the first intermediate vector, the second intermediate vector, and the third intermediate vector, determine whether the hint vector is valid based on a plurality of difference values obtained by subtracting a plurality of first coefficients included in the third intermediate vector from a plurality of second coefficients included in the verification vector, and based on determining that the hint vector is valid, store the input information and a signature corresponding to the signature vector and the challenge value in the memory.

In accordance with an aspect of the disclosure, a storage system includes: a host device; and a storage device including a memory and a storage controller that includes a security module, wherein the storage controller is configured to: obtain input information to be signed using a public key associated with a private key, wherein the public key corresponds to a public key matrix and a public key vector, and wherein the private key corresponds to a first private key vector and a second private key vector; calculate a first intermediate vector based on the public key matrix and a masking vector; calculate a challenge value based on the input information and the first intermediate vector; calculate a signature vector and a hint vector corresponding to the challenge value; calculate a second intermediate vector by multiplying the second private key vector by the challenge value, calculate a third intermediate vector by multiplying the public key vector by the challenge value, calculate a verification vector based on the first intermediate vector, the second intermediate vector, and the third intermediate vector, determine whether the hint vector is valid based on a plurality of difference values obtained by subtracting a plurality of first coefficients included in the third intermediate vector from a plurality of second coefficients included in the verification vector, and based on determining that the hint vector is valid, store the input information and a signature corresponding to the signature vector and the challenge value in the memory.

The first intermediate vector, the challenge value, the signature vector and the hint vector may be determined according to a Dilithium signature generation process.

The verification vector may comprise a plurality of verification coefficients. Each verification coefficient from among the plurality of verification coefficients may comprise upper bits and lower bits, wherein an order of the upper bits is higher than an order of the lower bits, and wherein the plurality of second coefficients correspond to the lower bits. The upper bits may be more significant bits than the lower bits.

If the hint vector is determined to not be valid, a new challenge value may be determined and the method may be repeated based on the new challenge value. The new challenge value may differ from the previous challenge value, due to being based on a new masking vector. The new masking vector may be a new sample from a distribution (e.g. a uniform distribution).

At least some of the above and other features of the invention are set out in the claims.

### BRIEF DESCRIPTION OF THE DRAWINGS

FIG. 1 is a block diagram of a computer system, according to embodiments.
FIG. 2 is a block diagram of a host storage system, according to embodiments.
FIG. 3 is a block diagram of a memory system, according to embodiments.
FIG. 4 is a block diagram of a memory device, according to embodiments.
FIG. 5 is a block diagram of a UFS system, according to embodiments.
FIG. 6 is a block diagram of a memory system, according to embodiments.
FIG. 7 is a block diagram of a storage system, according to embodiments.
FIG. 8 is a flowchart of a process of controlling a storage system, according to embodiments.
FIG. 9 is a block diagram of data center, according to embodiments.

### DETAILED DESCRIPTION

As discussed above, quantum-resistant digital signature schemes such as Cryptographic Suite for Algebraic Lattices (CRYSTALS)-Dilithium (also referred to herein as "Dilithium") are expected to become increasingly important as quantum computing becomes more common. Many implementations of Dilithium include compressing or quantizing coefficients of a portion of a public key in order to reduce the public key size. However, this compression may cause a skew in signatures generated during signing procedures, and this skew could potentially cause verification procedures to fail. Therefore, Dilithium signing procedures may include iteratively generating and testing a hint to be used during corresponding verification procedures. If the test indicates that the generated hint would not enable a verification procedure to correct the skew, then the iteration of the signing procedure fails, and a new iteration may be started to generate a new hint.

In some implementations of Dilithium, this test is performed using a condition that is not optimal, which may result in computational costs that are higher than necessary, and may require hardware that is more complex and expensive than necessary.

Therefore, embodiments may relate to an improved test that may result in a lower probability of failure for the hint during the signing procedure. Accordingly, embodiments may allow Dilithium digital signature schemes to be implemented with lower computational costs, and may allow these schemes to be performed using hardware with reduced complexity and cost.

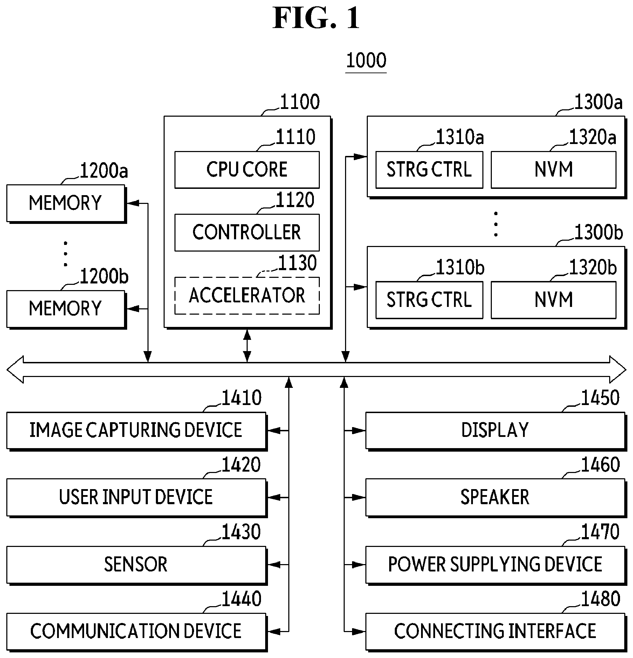

FIG. 1 is a diagram of a system 1000 to which embodiments may be applied. The system 1000 of FIG. 1 may be, for example, a mobile system, such as a portable communication terminal (e.g., a mobile phone), a smartphone, a tablet personal computer (PC), a wearable device, a healthcare device, or an Internet of things (IOT) device. However, the system 1000 of FIG. 1 is not necessarily limited to the mobile system and may be a PC, a laptop computer, a server, a media player, or an automotive device (e.g., a navigation device).

Referring to FIG. 1, the system 1000 may include a main processor 1100, memories (e.g., 1200a and 1200b), and storage devices (e.g., 1300a and 1300b). In addition, the system 1000 may include at least one of an image capturing device 1410, a user input device 1420, a sensor 1430, a communication device 1440, a display 1450, a speaker 1460, a power supplying device 1470, and a connecting interface 1480.

The main processor 1100 may control all operations of the system 1000, more specifically, operations of other components included in the system 1000. The main processor 1100 may be implemented as a general-purpose processor, a dedicated processor, or an application processor.

The main processor 1100 may include at least one CPU core 1110 and further include a controller 1120 configured to control the memories 1200a and 1200b and/or the storage devices 1300a and 1300b. In some embodiments, the main processor 1100 may further include an accelerator 1130, which is a dedicated circuit for a high-speed data operation, such as an artificial intelligence (AI) data operation. The accelerator 1130 may include a graphics processing unit (GPU), a neural processing unit (NPU) and/or a data processing unit (DPU) and be implemented as a chip that is physically separate from the other components of the main processor 1100.

The memories 1200a and 1200b may be used as main memory devices of the system 1000. Although each of the memories 1200a and 1200b may include a volatile memory, such as static random access memory (SRAM) and/or dynamic RAM (DRAM), each of the memories 1200a and 1200b may include non-volatile memory, such as a flash memory, phase-change RAM (PRAM) and/or resistive RAM (RRAM). The memories 1200a and 1200b may be implemented in the same package as the main processor 1100.

The storage devices 1300a and 1300b may serve as non-volatile storage devices configured to store data regardless of whether power is supplied thereto, and have larger storage capacity than the memories 1200a and 1200b. The storage devices 1300a and 1300b may respectively include storage controllers (STRG CTRL) 1310a and 1310b and Non-Volatile Memories (NVMs) 1320a and 1320b configured to store data via the control of the storage controllers 1310a and 1310b. Although the NVMs 1320a and 1320b may include flash memories having a two-dimensional (2D) structure or a three-dimensional (3D) V-NAND structure, embodiments are not limited thereto, and the NVMs 1320a and 1320b may include other types of NVMs, such as PRAM and/or RRAM.

The storage devices 1300a and 1300b may be physically separated from the main processor 1100 and included in the system 1000 or implemented in the same package as the main processor 1100. In addition, the storage devices 1300a and 1300b may have types of SSDs or memory cards, and may be removably combined with other components of the system 1000 through an interface, such as the connecting interface 1480 described below. The storage devices 1300a and 1300b may be devices to which a standard protocol, such as a universal flash storage (UFS), an embedded multi-media card (eMMC), or a non-volatile memory express (NVMe), is applied, without being limited thereto.

The image capturing device 1410 may capture still images or moving images. The image capturing device 1410 may include a camera, a camcorder, and/or a webcam.

The user input device 1420 may receive various types of data input by a user of the system 1000 and include a touch pad, a keypad, a keyboard, a mouse, and/or a microphone.

The sensor 1430 may detect various types of physical quantities, which may be obtained from the outside of the system 1000, and convert the detected physical quantities into electric signals. The sensor 1430 may include a temperature sensor, a pressure sensor, an illuminance sensor, a position sensor, an acceleration sensor, a biosensor, and/or a gyroscope sensor.

The communication device 1440 may transmit and receive signals between other devices outside the system 1000 according to various communication protocols. The communication device 1440 may include an antenna, a transceiver, and/or a modem.

The display 1450 and the speaker 1460 may serve as output devices configured to respectively output visual information and auditory information to the user of the system 1000.

The power supplying device 1470 may appropriately convert power supplied from a battery (not shown) embedded in the system 1000 and/or an external power source, and supply the converted power to each of components of the system 1000.

The connecting interface 1480 may provide connection between the system 1000 and an external device, which is connected to the system 1000 and capable of transmitting and receiving data to and from the system 1000. The connecting interface 1480 may be implemented by using various interface schemes, such as advanced technology attachment (ATA), serial ATA (SATA), external SATA (e-SATA), small computer small interface (SCSI), serial attached SCSI (SAS), peripheral component interconnection (PCI), PCI express (PCIe), NVMe, IEEE 1394, a universal serial bus (USB) interface, a secure digital (SD) card interface, a multi-media card (MMC) interface, an eMMC interface, a UFS interface, an embedded UFS (eUFS) interface, and a compact flash (CF) card interface.

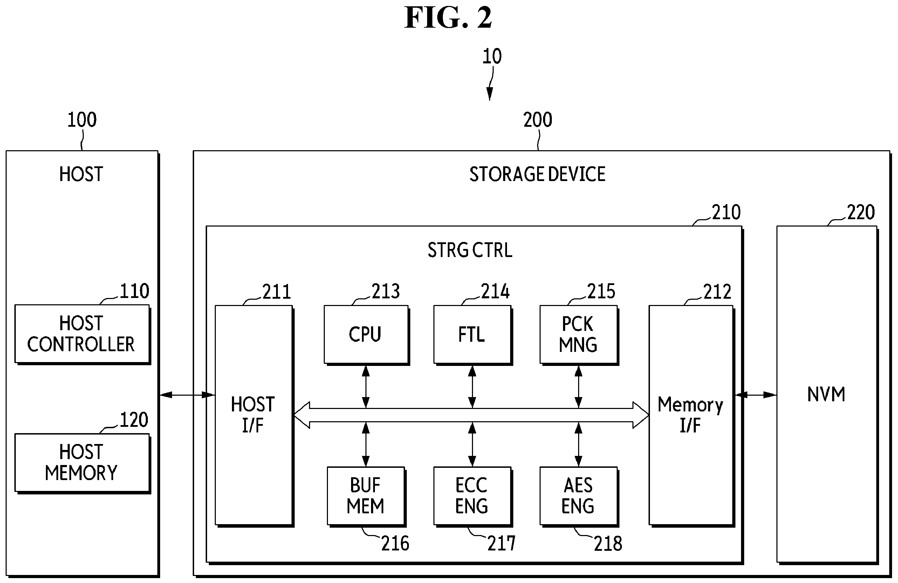

FIG. 2 is a block diagram of a host storage system 10 according to an example embodiment.

The host storage system 10 may include a host 100 and a storage device 200. Further, the storage device 200 may include a storage controller 210 and an NVM 220. According to an example embodiment, the host 100 may include a host controller 110 and a host memory 120. The host memory 120 may serve as a buffer memory configured to temporarily store data to be transmitted to the storage device 200 or data received from the storage device 200.

The storage device 200 may include storage media configured to store data in response to requests from the host 100. As an example, the storage device 200 may include at least one of an SSD, an embedded memory, and a removable external memory. When the storage device 200 is an SSD, the storage device 200 may be a device that conforms to an NVMe standard. When the storage device 200 is an embedded memory or an external memory, the storage device 200 may be a device that conforms to a UFS standard or an eMMC standard. Each of the host 100 and the storage device 200 may generate a packet according to an adopted standard protocol and transmit the packet.

When the NVM 220 of the storage device 200 includes a flash memory, the flash memory may include a 2D NAND memory array or a 3D (or vertical) NAND (VNAND) memory array. As another example, the storage device 200 may include various other kinds of NVMs. For example, the storage device 200 may include magnetic RAM (MRAM), spin-transfer torque MRAM, conductive bridging RAM (CBRAM), ferroelectric RAM (FRAM), PRAM, RRAM, and various other kinds of memories.

According to embodiments, the host controller 110 and the host memory 120 may be implemented as separate semiconductor chips. In some embodiments, the host controller 110 and the host memory 120 may be integrated in the same semiconductor chip. As an example, the host controller 110 may be any one of a plurality of modules included in an application processor (AP). The AP may be implemented as a System on Chip (SoC). Further, the host memory 120 may be an embedded memory included in the AP or an NVM or memory module located outside the AP.

The host controller 110 may manage an operation of storing data (e.g., write data) of a buffer region of the host memory 120 in the NVM 220 or an operation of storing data (e.g., read data) of the NVM 220 in the buffer region.

The storage controller 210 may include a host interface 211, a memory interface 212, and a CPU 213. Further, the storage controllers 210 may further include a flash translation layer (FTL) 214, a packet manager 215, a buffer memory 216, an error correction code (ECC) engine 217, and an advanced encryption standard (AES) engine 218. The storage controllers 210 may further include a working memory (not shown) in which the FTL 214 is loaded. The CPU 213 may execute the FTL 214 to control data write and read operations on the NVM 220.

The host interface 211 may transmit and receive packets to and from the host 100. A packet transmitted from the host 100 to the host interface 211 may include a command or data to be written to the NVM 220. A packet transmitted from the host interface 211 to the host 100 may include a response to the command or data read from the NVM 220. The memory interface 212 may transmit data to be written to the NVM 220 to the NVM 220 or receive data read from the NVM 220. The memory interface 212 may be configured to comply with a standard protocol, such as Toggle or open NAND flash interface (ONFI).

The FTL 214 may perform various functions, such as an address mapping operation, a wear-leveling operation, and a garbage collection operation. The address mapping operation may be an operation of converting a logical address received from the host 100 into a physical address used to actually store data in the NVM 220. The wear-leveling operation may be a technique for preventing excessive deterioration of a specific block by allowing blocks of the NVM 220 to be uniformly used. As an example, the wear-leveling operation may be implemented using a firmware technique that balances erase counts of physical blocks. The garbage collection operation may be a technique for ensuring usable capacity in the NVM 220 by erasing an existing block after copying valid data of the existing block to a new block.

The packet manager 215 may generate a packet according to a protocol of an interface, which consents to the host 100, or parse various types of information from the packet received from the host 100. In addition, the buffer memory 216 may temporarily store data to be written to the NVM 220 or data to be read from the NVM 220. Although the buffer memory 216 may be a component included in the storage controllers 210, the buffer memory 216 may be outside the storage controllers 210.

The ECC engine 217 may perform error detection and correction operations on read data read from the NVM 220. More specifically, the ECC engine 217 may generate parity bits for write data to be written to the NVM 220, and the generated parity bits may be stored in the NVM 220 together with write data. During the reading of data from the NVM 220, the ECC engine 217 may correct an error in the read data by using the parity bits read from the NVM 220 along with the read data, and output error-corrected read data.

The AES engine 218 may perform at least one of an encryption operation and a decryption operation on data input to the storage controllers 210 by using a symmetric-key algorithm.

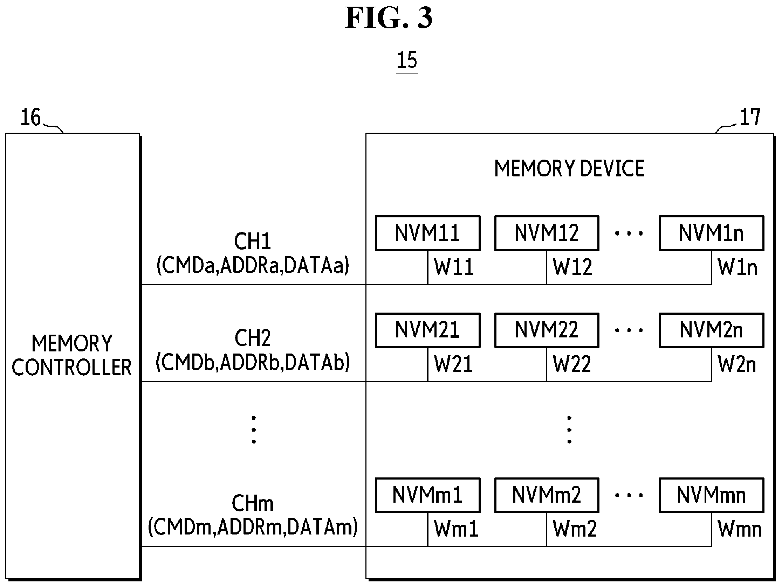

FIG. 3 is a block diagram of a memory system 15 according embodiments. Referring to FIG. 3, the memory system 15 may include a memory device 17 and a memory controller 16. The memory system 15 may support a plurality of channels CH1 to CHm, and the memory device 17 may be connected to the memory controller 16 through the plurality of channels CH1 to CHm. For example, the memory system 15 may be implemented as a storage device, such as an SSD.

The memory device 17 may include a plurality of NVM devices NVM11 to NVMmn. Each of the NVM devices NVM11 to NVMmn may be connected to one of the plurality of channels CH1 to CHm through a way corresponding thereto. For instance, the NVM devices NVM11 to NVM1n may be connected to a first channel CH1 through ways W11 to W1n, and the NVM devices NVM21 to NVM2n may be connected to a second channel CH2 through ways W21 to W2n. In an example embodiment, each of the NVM devices NVM11 to NVMmn may be implemented as an arbitrary memory unit that may operate according to an individual command from the memory controller 16. For example, each of the NVM devices NVM11 to NVMmn may be implemented as a chip or a die, but the inventive concept is not limited thereto.

The memory controller 16 may transmit and receive signals to and from the memory device 17 through the plurality of channels CH1 to CHm. For example, the memory controller 16 may transmit commands CMDa to CMDm, addresses ADDRa to ADDRm, and data DATAa to DATAm to the memory device 17 through the channels CH1 to CHm or receive the data DATAa to DATAm from the memory device 17.

The memory controller 16 may select one of the NVM devices NVM11 to NVMmn, which is connected to each of the channels CH1 to CHm, by using a corresponding one of the channels CH1 to CHm, and transmit and receive signals to and from the selected NVM device. For example, the memory controller 16 may select the NVM device NVM11 from the NVM devices NVM11 to NVM1n connected to the first channel CH1. The memory controller 16 may transmit the command CMDa, the address ADDRa, and the data DATAa to the selected NVM device NVM11 through the first channel CH1 or receive the data DATAa from the selected NVM device NVM11.

The memory controller 16 may transmit and receive signals to and from the memory device 17 in parallel through different channels. For example, the memory controller 16 may transmit a command CMDb to the memory device 17 through the second channel CH2 while transmitting a command CMDa to the memory device 17 through the first channel CH1. For example, the memory controller 16 may receive data DATAb from the memory device 17 through the second channel CH2 while receiving data DATAa from the memory device 17 through the first channel CH1.

The memory controller 16 may control all operations of the memory device 17. The memory controller 16 may transmit a signal to the channels CH1 to CHm and control each of the NVM devices NVM11 to NVMmn connected to the channels CH1 to CHm. For instance, the memory controller 16 may transmit the command CMDa and the address ADDRa to the first channel CH1 and control one selected from the NVM devices NVM11 to NVM1n.

Each of the NVM devices NVM11 to NVMmn may operate via the control of the memory controller 16. For example, the NVM device NVM11 may program the data DATAa based on the command CMDa, the address ADDRa, and the data DATAa provided to the first channel CH1. For example, the NVM device NVM21 may read the data DATAb based on the command CMDb and the address ADDb provided to the second channel CH2 and transmit the read data DATAb to the memory controller 16.

Although FIG. 3 illustrates an example in which the memory device 17 communicates with the memory controller 16 through m channels and includes n NVM devices corresponding to each of the channels, the number of channels and the number of NVM devices connected to one channel may be variously changed.

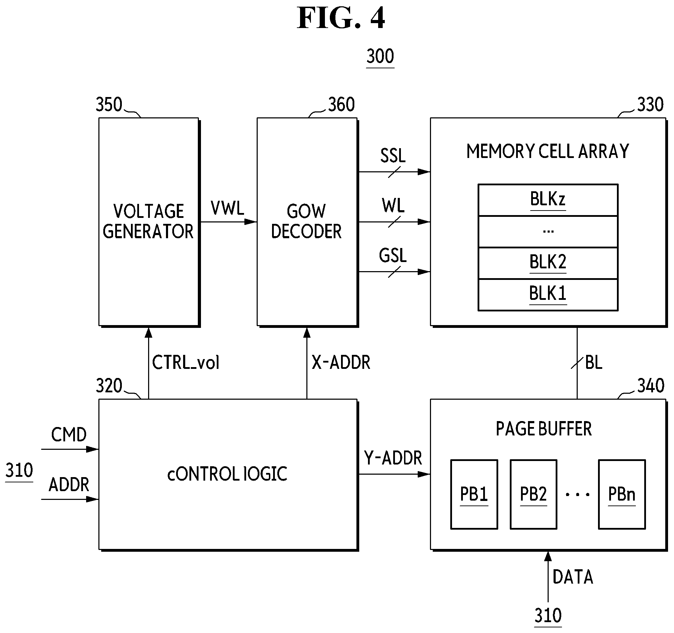

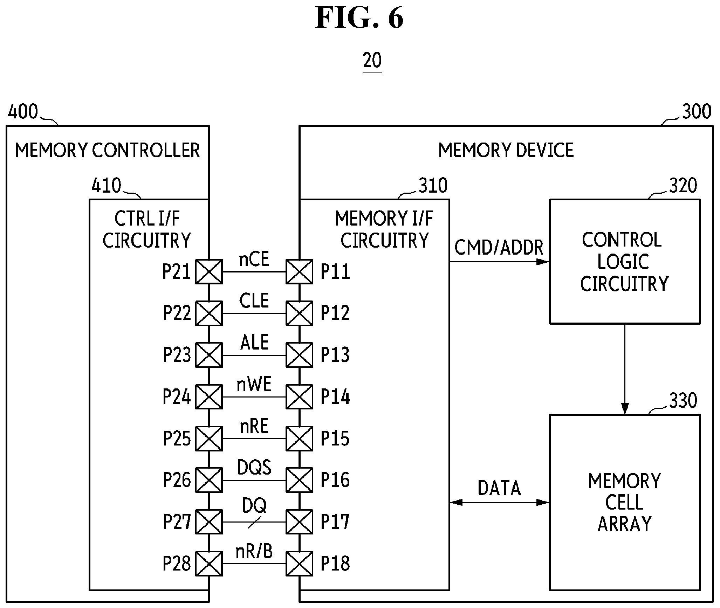

FIG. 4 is a block diagram of a memory device 300 according to an example embodiment. Referring to FIG. 4, the memory device 300 may include a control logic circuitry 320, a memory cell array 330, a page buffer 340, a voltage generator 350, and a row decoder 360. Although not shown in FIG. 4, the memory device 300 may further include a memory interface circuitry 310 shown in FIG. 6. In addition, the memory device 300 may further include a column logic, a pre-decoder, a temperature sensor, a command decoder, and/or an address decoder.

The control logic circuitry 320 may control all various operations of the memory device 300. The control logic circuitry 320 may output various control signals in response to commands CMD and/or addresses ADDR from the memory interface circuitry 310. For example, the control logic circuitry 320 may output a voltage control signal CTRL_vol, a row address X-ADDR, and a column address Y-ADDR.

The memory cell array 330 may include a plurality of memory blocks BLK1 to BLKz (here, z is a positive integer), each of which may include a plurality of memory cells. The memory cell array 330 may be connected to the page buffer 340 through bit lines BL and be connected to the row decoder 360 through word lines WL, string selection lines SSL, and ground selection lines GSL.

In an example embodiment, the memory cell array 330 may include a 3D memory cell array, which includes a plurality of NAND strings. Each of the NAND strings may include memory cells respectively connected to word lines vertically stacked on a substrate. The disclosures of US Pat. Nos. 7,679,133; 8,553,466; 8,654,587; 8,559,235; and US Pat. Pub. No. 2011/0233648 provide further detail and are hereby incorporated by reference. In an example embodiment, the memory cell array 330 may include a 2D memory cell array, which includes a plurality of NAND strings arranged in a row direction and a column direction.

The page buffer 340 may include a plurality of page buffers PB1 to PBn (here, n is an integer greater than or equal to 3), which may be respectively connected to the memory cells through a plurality of bit lines BL. The page buffer 340 may select at least one of the bit lines BL in response to the column address Y-ADDR. The page buffer 340 may operate as a write driver or a sense amplifier according to an operation mode. For example, during a program operation, the page buffer 340 may apply a bit line voltage corresponding to data to be programmed, to the selected bit line. During a read operation, the page buffer 340 may sense current or a voltage of the selected bit line BL and sense data stored in the memory cell.

The voltage generator 350 may generate various kinds of voltages for program, read, and erase operations based on the voltage control signal CTRL_vol. For example, the voltage generator 350 may generate a program voltage, a read voltage, a program verification voltage, and an erase voltage as a word line voltage VWL.

The row decoder 360 may select one of a plurality of word lines WL and select one of a plurality of string selection lines SSL in response to the row address X-ADDR. For example, the row decoder 360 may apply the program voltage and the program verification voltage to the selected word line WL during a program operation and apply the read voltage to the selected word line WL during a read operation.

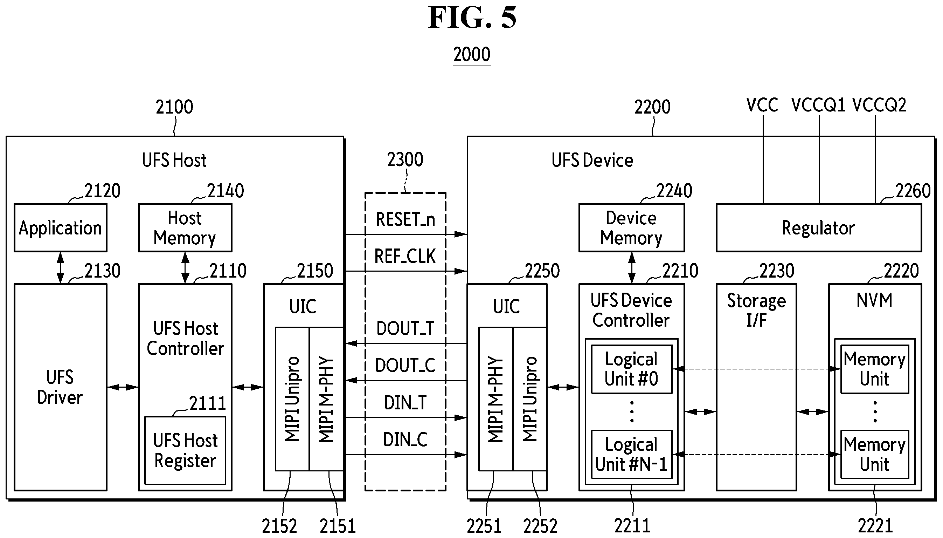

FIG. 5 is a diagram of a UFS system 2000 according to embodiments. The UFS system 2000 may be a system conforming to a UFS standard announced by Joint Electron Device Engineering Council (JEDEC) and include a UFS host 2100, a UFS device 2200, and a UFS interface 2300. The above description of the system 1000 of FIG. 1 may also be applied to the UFS system 2000 of FIG. 5 within a range that does not conflict with the following description of FIG. 5.

Referring to FIG. 5, the UFS host 2100 may be connected to the UFS device 2200 through the UFS interface 2300. When the main processor 1100 of FIG. 1 is an AP, the UFS host 2100 may be implemented as a portion of the AP. The UFS host controller 2110 and the host memory 2140 may respectively correspond to the controller 1120 of the main processor 1100 and the memories 1200a and 1200b of FIG. 1. The UFS device 2200 may correspond to the storage device 1300a and 1300b of FIG. 1, and a UFS device controller 2210 and an NVM 2220 may respectively correspond to the storage controllers 1310a and 1310b and the NVMs 1320a and 1320b of FIG. 1.

The UFS host 2100 may include a UFS host controller 2110, an application 2120, a UFS driver 2130, a host memory 2140, and a UFS interconnect (UIC) layer 2150. The UFS device 2200 may include the UFS device controller 2210, the NVM 2220, a storage interface 2230, a device memory 2240, a UIC layer 2250, and a regulator 2260. The NVM 2220 may include a plurality of memory units 2221. Although each of the memory units 2221 may include a V-NAND flash memory having a 2D structure or a 3D structure, each of the memory units 2221 may include another kind of NVM, such as PRAM and/or RRAM. The UFS device controller 2210 may be connected to the NVM 2220 through the storage interface 2230. The storage interface 2230 may be configured to comply with a standard protocol, such as Toggle or ONFI.

The application 2120 may refer to a program that wants to communicate with the UFS device 2200 to use functions of the UFS device 2200. The application 2120 may transmit input-output requests (IORs) to the UFS driver 2130 for input/output (I/O) operations on the UFS device 2200. The IORs may refer to a data read request, a data storage (or write) request, and/or a data erase (or discard) request, without being limited thereto.

The UFS driver 2130 may manage the UFS host controller 2110 through a UFS-host controller interface (UFS-HCI). The UFS driver 2130 may convert the IOR generated by the application 2120 into a UFS command defined by the UFS standard and transmit the UFS command to the UFS host controller 2110. One IOR may be converted into a plurality of UFS commands. Although the UFS command may basically be defined by an SCSI standard, the UFS command may be a command dedicated to the UFS standard.

The UFS host controller 2110 may transmit the UFS command converted by the UFS driver 2130 to the UIC layer 2250 of the UFS device 2200 through the UIC layer 2150 and the UFS interface 2300. During the transmission of the UFS command, a UFS host register 2111 of the UFS host controller 2110 may serve as a command queue (CQ).

The UIC layer 2150 on the side of the UFS host 2100 may include a mobile industry processor interface (MIPI) M-PHY 2151 and an MIPI UniPro 2152, and the UIC layer 2250 on the side of the UFS device 2200 may also include an MIPI M-PHY 2251 and an MIPI UniPro 2252.

The UFS interface 2300 may include a line configured to transmit a reference clock signal REF_CLK, a line configured to transmit a hardware reset signal RESET_n for the UFS device 2200, a pair of lines configured to transmit a pair of differential input signals DIN_t and DIN_c, and a pair of lines configured to transmit a pair of differential output signals DOUT_t and DOUT_c.

A frequency of a reference clock signal REF_CLK provided from the UFS host 2100 to the UFS device 2200 may be one of 19.2MHz, 26MHz, 38.4MHz, and 52MHz, without being limited thereto. The UFS host 2100 may change the frequency of the reference clock signal REF_CLK during an operation, that is, during data transmission/receiving operations between the UFS host 2100 and the UFS device 2200. The UFS device 2200 may generate cock signals having various frequencies from the reference clock signal REF_CLK provided from the UFS host 2100, by using a phase-locked loop (PLL). Also, the UFS host 2100 may set a data rate between the UFS host 2100 and the UFS device 2200 by using the frequency of the reference clock signal REF_CLK. That is, the data rate may be determined depending on the frequency of the reference clock signal REF_CLK.

The UFS interface 2300 may support a plurality of lanes, each of which may be implemented as a pair of differential lines. For example, the UFS interface 2300 may include at least one receiving lane and at least one transmission lane. In FIG. 5, a pair of lines configured to transmit a pair of differential input signals DIN_T and DIN_C may constitute a receiving lane, and a pair of lines configured to transmit a pair of differential output signals DOUT_T and DOUT_C may constitute a transmission lane. Although one transmission lane and one receiving lane are illustrated in FIG. 5, the number of transmission lanes and the number of receiving lanes may be changed.

The receiving lane and the transmission lane may transmit data based on a serial communication scheme. Full-duplex communications between the UFS host 2100 and the UFS device 2200 may be enabled due to a structure in which the receiving lane is separated from the transmission lane. That is, while receiving data from the UFS host 2100 through the receiving lane, the UFS device 2200 may transmit data to the UFS host 2100 through the transmission lane. In addition, control data (e.g., a command) from the UFS host 2100 to the UFS device 2200 and user data to be stored in or read from the NVM 2220 of the UFS device 2200 by the UFS host 2100 may be transmitted through the same lane. Accordingly, between the UFS host 2100 and the UFS device 2200, there may be no need to further provide a separate lane for data transmission in addition to a pair of receiving lanes and a pair of transmission lanes.

The UFS device controller 2210 of the UFS device 2200 may control all operations of the UFS device 2200. The UFS device controller 2210 may manage the NVM 2220 by using a logical unit (LU) 2211, which is a logical data storage unit. The number of LUs 2211 may be 8, without being limited thereto. The UFS device controller 2210 may include an FTL and convert a logical data address (e.g., a logical block address (LBA)) received from the UFS host 2100 into a physical data address (e.g., a physical block address (PBA)) by using address mapping information of the FTL. A logical block configured to store user data in the UFS system 2000 may have a size in a predetermined range. For example, a minimum size of the logical block may be set to 4 Kbyte.

When a command from the UFS host 2100 is applied through the UIC layer 2250 to the UFS device 2200, the UFS device controller 2210 may perform an operation in response to the command and transmit a completion response to the UFS host 2100 when the operation is completed.

As an example, when the UFS host 2100 intends to store user data in the UFS device 2200, the UFS host 2100 may transmit a data storage command to the UFS device 2200. When a response (a 'ready-to-transfer' response) indicating that the UFS host 2100 is ready to receive user data (ready-to-transfer) is received from the UFS device 2200, the UFS host 2100 may transmit user data to the UFS device 2200. The UFS device controller 2210 may temporarily store the received user data in the device memory 2240 and store the user data, which is temporarily stored in the device memory 2240, at a selected position of the NVM 2220 based on the address mapping information of the FTL.

As another example, when the UFS host 2100 intends to read the user data stored in the UFS device 2200, the UFS host 2100 may transmit a data read command to the UFS device 2200. The UFS device controller 2210, which has received the command, may read the user data from the NVM 2220 based on the data read command and temporarily store the read user data in the device memory 2240. During the read operation, the UFS device controller 2210 may detect and correct an error in the read user data by using an ECC engine (not shown) embedded therein. More specifically, the ECC engine may generate parity bits for write data to be written to the NVM 2220, and the generated parity bits may be stored in the NVM 2220 along with the write data. During the reading of data from the NVM 2220, the ECC engine may correct an error in read data by using the parity bits read from the NVM 2220 along with the read data, and output error-corrected read data.

In addition, the UFS device controller 2210 may transmit user data, which is temporarily stored in the device memory 2240, to the UFS host 2100. In addition, the UFS device controller 2210 may further include an AES engine (not shown). The AES engine may perform at least of an encryption operation and a decryption operation on data transmitted to the UFS device controller 2210 by using a symmetric-key algorithm.

The UFS host 2100 may sequentially store commands, which are to be transmitted to the UFS device 2200, in the UFS host register 2111, which may serve as a common queue, and sequentially transmit the commands to the UFS device 2200. In this case, even while a previously transmitted command is still being processed by the UFS device 2200, that is, even before receiving a notification that the previously transmitted command has been processed by the UFS device 2200, the UFS host 2100 may transmit a next command, which is on standby in the CQ, to the UFS device 2200. Thus, the UFS device 2200 may also receive a next command from the UFS host 2100 during the processing of the previously transmitted command. A maximum number (or queue depth) of commands that may be stored in the CQ may be, for example, 32. Also, the CQ may be implemented as a circular queue in which a start and an end of a command line stored in a queue are indicated by a head pointer and a tail pointer.

Each of the plurality of memory units 2221 may include a memory cell array (not shown) and a control circuit (not shown) configured to control an operation of the memory cell array. The memory cell array may include a 2D memory cell array or a 3D memory cell array. The memory cell array may include a plurality of memory cells. Although each of the memory cells is a single-level cell (SLC) configured to store 1-bit information, each of the memory cells may be a cell configured to store information of 2 bits or more, such as a multi-level cell (MLC), a triple-level cell (TLC), and a quadruple-level cell (QLC). The 3D memory cell array may include a vertical NAND string in which at least one memory cell is vertically oriented and located on another memory cell.

Voltages VCC, VCCQ, and VCCQ2 may be applied as power supply voltages to the UFS device 2200. The voltage VCC may be a main power supply voltage for the UFS device 2200 and be in a range of 2.4 V to 3.6 V. The voltage VCCQ may be a power supply voltage for supplying a low voltage mainly to the UFS device controller 2210 and be in a range of 1.14 V to 1.26 V. The voltage VCCQ2 may be a power supply voltage for supplying a voltage, which is lower than the voltage VCC and higher than the voltage VCCQ, mainly to an I/O interface, such as the MIPI M-PHY 2251, and be in a range of 1.7 V to 1.95 V. The power supply voltages may be supplied through the regulator 2260 to respective components of the UFS device 2200. The regulator 2260 may be implemented as a set of unit regulators respectively connected to different ones of the power supply voltages described above.

FIG. 6 is a block diagram of a memory system 20 according to embodiments. Referring to FIG. 6, the memory system 20 may include a memory device 300 and a memory controller 400. The memory device 300 may correspond to one of NVM devices NVM11 to NVMmn, which communicate with a memory controller 200 based on one of the plurality of channels CH1 to CHm of FIG. 3. The memory controller 400 may correspond to the memory controller 200 of FIG. 3.

The memory device 300 may include first to eighth pins P11 to P18, a memory interface circuitry 310, a control logic circuitry 320, and a memory cell array 330.

The memory interface circuitry 310 may receive a chip enable signal nCE from the memory controller 400 through the first pin P11. The memory interface circuitry 310 may transmit and receive signals to and from the memory controller 400 through the second to eighth pins P12 to P18 in response to the chip enable signal nCE. For example, when the chip enable signal nCE is in an enable state (e.g., a low level), the memory interface circuitry 310 may transmit and receive signals to and from the memory controller 400 through the second to eighth pins P12 to P18.

The memory interface circuitry 310 may receive a command latch enable signal CLE, an address latch enable signal ALE, and a write enable signal nWE from the memory controller 400 through the second to fourth pins P12 to P14. The memory interface circuitry 310 may receive a data signal DQ from the memory controller 400 through the seventh pin P17 or transmit the data signal DQ to the memory controller 400. A command CMD, an address ADDR, and data may be transmitted via the data signal DQ. For example, the data signal DQ may be transmitted through a plurality of data signal lines. In this case, the seventh pin P17 may include a plurality of pins respectively corresponding to a plurality of data signals DQ(s).

The memory interface circuitry 310 may obtain the command CMD from the data signal DQ, which is received in an enable section (e.g., a high-level state) of the command latch enable signal CLE based on toggle time points of the write enable signal nWE. The memory interface circuitry 310 may obtain the address ADDR from the data signal DQ, which is received in an enable section (e.g., a high-level state) of the address latch enable signal ALE based on the toggle time points of the write enable signal nWE.

In an example embodiment, the write enable signal nWE may be maintained at a static state (e.g., a high level or a low level) and toggle between the high level and the low level. For example, the write enable signal nWE may toggle in a section in which the command CMD or the address ADDR is transmitted. Thus, the memory interface circuitry 310 may obtain the command CMD or the address ADDR based on toggle time points of the write enable signal nWE.

The memory interface circuitry 310 may receive a read enable signal nRE from the memory controller 400 through the fifth pin P15. The memory interface circuitry 310 may receive a data strobe signal DQS from the memory controller 400 through the sixth pin P16 or transmit the data strobe signal DQS to the memory controller 400.

In a data (DATA) output operation of the memory device 300, the memory interface circuitry 310 may receive the read enable signal nRE, which toggles through the fifth pin P15, before outputting the data DATA. The memory interface circuitry 310 may generate the data strobe signal DQS, which toggles based on the toggling of the read enable signal nRE. For example, the memory interface circuitry 310 may generate a data strobe signal DQS, which starts toggling after a predetermined delay (e.g., tDQSRE), based on a toggling start time of the read enable signal nRE. The memory interface circuitry 310 may transmit the data signal DQ including the data DATA based on a toggle time point of the data strobe signal DQS. Thus, the data DATA may be aligned with the toggle time point of the data strobe signal DQS and transmitted to the memory controller 400.

In a data (DATA) input operation of the memory device 300, when the data signal DQ including the data DATA is received from the memory controller 400, the memory interface circuitry 310 may receive the data strobe signal DQS, which toggles, along with the data DATA from the memory controller 400. The memory interface circuitry 310 may obtain the data DATA from the data signal DQ based on toggle time points of the data strobe signal DQS. For example, the memory interface circuitry 310 may sample the data signal DQ at rising and falling edges of the data strobe signal DQS and obtain the data DATA.

The memory interface circuitry 310 may transmit a ready/busy output signal nR/B to the memory controller 400 through the eighth pin P18. The memory interface circuitry 310 may transmit state information of the memory device 300 through the ready/busy output signal nR/B to the memory controller 400. When the memory device 300 is in a busy state (i.e., when operations are being performed in the memory device 300), the memory interface circuitry 310 may transmit a ready/busy output signal nR/B indicating the busy state to the memory controller 400. When the memory device 300 is in a ready state (i.e., when operations are not performed or completed in the memory device 300), the memory interface circuitry 310 may transmit a ready/busy output signal nR/B indicating the ready state to the memory controller 400. For example, while the memory device 300 is reading data DATA from the memory cell array 330 in response to a page read command, the memory interface circuitry 310 may transmit a ready/busy output signal nR/B indicating a busy state (e.g., a low level) to the memory controller 400. For example, while the memory device 300 is programming data DATA to the memory cell array 330 in response to a program command, the memory interface circuitry 310 may transmit a ready/busy output signal nR/B indicating the busy state to the memory controller 400.

The control logic circuitry 320 may control all operations of the memory device 300. The control logic circuitry 320 may receive the command/address CMD/ADDR obtained from the memory interface circuitry 310. The control logic circuitry 320 may generate control signals for controlling other components of the memory device 300 in response to the received command/address CMD/ADDR. For example, the control logic circuitry 320 may generate various control signals for programming data DATA to the memory cell array 330 or reading the data DATA from the memory cell array 330.

The memory cell array 330 may store the data DATA obtained from the memory interface circuitry 310, via the control of the control logic circuitry 320. The memory cell array 330 may output the stored data DATA to the memory interface circuitry 310 via the control of the control logic circuitry 320.

The memory cell array 330 may include a plurality of memory cells. For example, the plurality of memory cells may be flash memory cells. However, the inventive concept is not limited thereto, and the memory cells may be RRAM cells, FRAM cells, PRAM cells, thyristor RAM (TRAM) cells, or MRAM cells. Hereinafter, an embodiment in which the memory cells are NAND flash memory cells will mainly be described.

The memory controller 400 may include first to eighth pins P21 to P28 and a controller interface circuitry 410. The first to eighth pins P21 to P28 may respectively correspond to the first to eighth pins P11 to P18 of the memory device 300.

The controller interface circuitry 410 may transmit a chip enable signal nCE to the memory device 300 through the first pin P21. The controller interface circuitry 410 may transmit and receive signals to and from the memory device 300, which is selected by the chip enable signal nCE, through the second to eighth pins P22 to P28.

The controller interface circuitry 410 may transmit the command latch enable signal CLE, the address latch enable signal ALE, and the write enable signal nWE to the memory device 300 through the second to fourth pins P22 to P24. The controller interface circuitry 410 may transmit or receive the data signal DQ to and from the memory device 300 through the seventh pin P27.

The controller interface circuitry 410 may transmit the data signal DQ including the command CMD or the address ADDR to the memory device 300 along with the write enable signal nWE, which toggles. The controller interface circuitry 410 may transmit the data signal DQ including the command CMD to the memory device 300 by transmitting a command latch enable signal CLE having an enable state. Also, the controller interface circuitry 410 may transmit the data signal DQ including the address ADDR to the memory device 300 by transmitting an address latch enable signal ALE having an enable state.

The controller interface circuitry 410 may transmit the read enable signal nRE to the memory device 300 through the fifth pin P25. The controller interface circuitry 410 may receive or transmit the data strobe signal DQS from or to the memory device 300 through the sixth pin P26.

In a data (DATA) output operation of the memory device 300, the controller interface circuitry 410 may generate a read enable signal nRE, which toggles, and transmit the read enable signal nRE to the memory device 300. For example, before outputting data DATA, the controller interface circuitry 410 may generate a read enable signal nRE, which is changed from a static state (e.g., a high level or a low level) to a toggling state. Thus, the memory device 300 may generate a data strobe signal DQS, which toggles, based on the read enable signal nRE. The controller interface circuitry 410 may receive the data signal DQ including the data DATA along with the data strobe signal DQS, which toggles, from the memory device 300. The controller interface circuitry 410 may obtain the data DATA from the data signal DQ based on a toggle time point of the data strobe signal DQS.

In a data (DATA) input operation of the memory device 300, the controller interface circuitry 410 may generate a data strobe signal DQS, which toggles. For example, before transmitting data DATA, the controller interface circuitry 410 may generate a data strobe signal DQS, which is changed from a static state (e.g., a high level or a low level) to a toggling state. The controller interface circuitry 410 may transmit the data signal DQ including the data DATA to the memory device 300 based on toggle time points of the data strobe signal DQS.

The controller interface circuitry 410 may receive a ready/busy output signal nR/B from the memory device 300 through the eighth pin P28. The controller interface circuitry 410 may determine state information of the memory device 300 based on the ready/busy output signal nR/B.

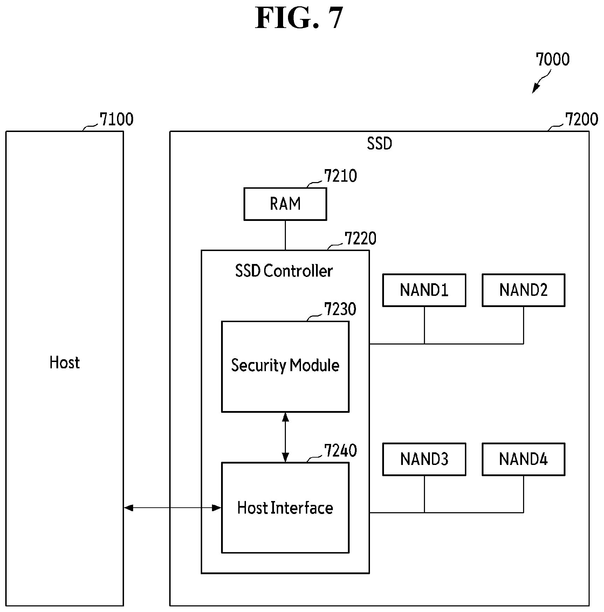

FIG. 7 is block diagram illustrating an example of a storage system 7000, according to embodiments. The storage system 7000 may include a host 7100 and an SSD 7200. In embodiments, the host 7100 may correspond to, for example, the host 100, the UFS host 2100, or any element including the main processor 1100, the CPU core 1110, the host controller 110, the UFS host controller 2110, or any other element discussed above. In embodiments, the SSD 7200 may correspond to the storage devices 1300a and 1300b, the storage device 200, the memory system 15, the memory system 20, the memory device 300, or any other element discussed above. Although the SSD 7200 is illustrated as an SSD, embodiments may also be applied to any other type of storage device, for example a UFS storage device such as the UFS device 2200, or any other storage device such as an eMMC storage device. In embodiments, the host 7100 may communicate with a storage device, for example the SSD 7200, using a communication pathway such as a PCIe bus, however embodiments are not limited thereto, and host 7100 may communicate with any type of storage device over any type of connection.

The SSD 7200 may include a RAM 7210, an SSD controller 7220, and one or more memory devices such as NAND flash memory devices NAND1, NAND2, NAND3, and NAND4. In embodiments, the RAM 7210 may correspond to the buffer memory 216, the device memory 2240, or any other element discussed above. In embodiments, the SSD controller 7220 may correspond to the STRG CTRL 1310a and 1310b, the STRG CTRL 210, memory controller 16, the UFS device controller 2210, the memory controller 400, or any other element described above. In embodiments, the memory devices NAND1, NAND2, NAND3, and NAND4 may correspond to the NVMs 1320a and 1320b, the NVM 220, the NVM devices NVM11-NVMmn, the memory device 300, the NVM 2220, or any other element described above.

In embodiments, the SSD controller 7220 may include a security module 7230 and a host interface 7240, however embodiments are not limited thereto. In embodiments, one or more of the security module 7230 and the host interface 7240 may be implemented separately from the SSD controller 7220. In embodiments, the host interface 7240 may correspond to the host interface 211, the UIC layer 2250, or any other element discussed above.

In embodiments, the security module 7230 may be used to implement and perform operations and procedures related to digital signature schemes such as Dilithium to provide data security. For example, the security module 7230 may use digital signature schemes to generate digital signatures corresponding to data stored in the SSD 7200, which may allow the storage system 7000 to determine whether the data is authentic, and whether data tampering has occurred. In addition, the security module 7230 may use digital signature schemes for other purposes, such as authenticating firmware, etc.

In embodiments, the security module 7230 may include hardware such as a processor or processing circuitry which may be used to perform one or more operations which may correspond to, or be included in, at least one from among a key generation procedure that may be used to generate a private key and a corresponding public key, a signing procedure that may be used to generate a signature corresponding to input data based on the private key, and a verification procedure that may be used to authenticate the input data using the public key and the signature. In embodiments, the security module 7230 may be used to perform, for example, Number Theoretic Transform (NTT) operations included in, or corresponding to, these procedures. In some embodiments, the processing circuitry may include one or more application-specific integrated circuits (ASICs), but embodiments are not limited thereto.

Embodiments may relate to implementations of the Dilithium digital signature scheme which include an improved test that may reduce the probability of failure in the signing procedure. According to embodiments, this reduced probability of failure may allow the security module 7230 to be implemented using a processor or processing circuitry with reduced complexity or cost.

For example, when the security module 7230 includes processing circuitry used to implement a signing procedure, portions of this processing circuitry may be dedicated to processing that may occur after a test included in the signing procedure is failed. However, embodiments may allow the signing procedure to be implemented using a new test that has a reduced probability of failure. As a result, a size or complexity of the processing circuitry included in the security module 7230 may be reduced accordingly. In addition, the reduction in processing requirements may allow for a corresponding reduction in other resources used by the SSD controller 7200, for example a reduction in internal memory such as peripheral RAM that may be used by the processing hardware included in the security module 7230. As an example, some embodiments may allow the security module 7230 to be implemented using hardware having a size or complexity that is reduced by approximately 20% to 30%, in comparison with processing circuitry corresponding to that include other, less-optimal tests, but embodiments are not limited thereto.

As discussed above, one example implementation of the Dilithium digital signature scheme is provided in Bai, S., Ducas, L., Kiltz, E., Lepoint, T., Lyubashevsky, V., Schwabe, P., Seiler, G., & Stehlé, D. (2021). CRYSTALS-Dilithium: Algorithm Specifications and Supporting Documentation (Version 3.1) (Technical Report) (Post-Quantum Cryptography Standardization Process), National Institute of Standards and Technology, the contents of which is incorporated herein by reference in its entirety. The notation and definitions used below are similar to the notation and definitions used in Bai. However, this is used only as an example for convenience of description, and embodiments are not limited to the content of Bai, or to the examples provided therein.

Dilithium may be based on arithmetic over a polynomial ring *R_{q}*, where *q* may denote an odd prime number. Dilithium may be an instance of a general family of lattice-based digital signature schemes that are obtained by applying the Fiat-Shamir transform to lattice-based interactive proofs-of-knowledge. A Dilithium key generation procedure according to Dilithium may generate a public key matrix **A**, where each entry of the matrix is a polynomial in the ring *R_{q}.* The key generation procedure may also create a first private key vector **s**₁ and a second private key vector **s**₂, whose components are the ring *R_{q}.* The public key may include the public key matrix **A** and a public key vector **t,** which may be obtained according to Equation 2 below: $t = {As}_{1} + {s}_{2}$ Equation 2

According to embodiments, it may be infeasible for a quantum computer to determine the secret values given only the public key (e.g., the public key vector **t** and the public key matrix **A**). Accordingly, Dilithium may be referred to as a quantum-resistant cryptographic algorithm.

A Dilithium signing procedure may receive as input a message *M*, and may generate a signature *σ* = (**z**, *c*) corresponding to the message *M*. For convenience of description, the vector **z** may be referred to as a signature vector, and the value c may be referred to as a challenge value.

The signing procedure may further include calculating a vector **w**₁ according to Equation 3 below: ${w}_{1} = {HighBits}_{q} \left(w,2{γ}_{2}\right)$ Equation 23

In Equation 3, *γ*₂ may denote a threshold value, and **w** may denote a vector (e.g. a first intermediate vector) calculated according to Equation 4 below: $w = Ay$ Equation 4

In Equation 4, **y** may denote a masking vector. The masking vector **y** may be sampled from a distribution (e.g. a uniform distribution).

In addition, HighBit*s_{q}* may denote an operation or procedure that may be used in some implementations of Dilithium to obtain high-order bits of coefficients included in a vector. For example, every coefficient *w* in **Ay** may be written according to Equation 5 below: $w = {w}_{1} ⋅ 2 {γ}_{2} + {w}_{0} where \left|{w}_{0}\right| \leq {γ}_{2}$ Equation 5

The vector **w**₁ returned by applying HighBit*s_{q}* to the vector **w** according to the condition 2*γ*₂ may be a vector including all of the coefficients *w*₁. Similarly, a vector **w**₀ may be a vector including all of the coefficients *w*₀, which may be denoted LowBit*s_{q}*(**w**, 2*γ*₂). In embodiments, a result obtained by applying HighBit*s_{q}* may be referred to as upper bits, and a result obtained by applying LowBit*s_{q}* may be referred to as lower bits. For example, a vector ***w***₁ may be referred to as upper bits of the vector **w,** and the vector ***w***₀ may be referred to as lower bits of the vector **w,** but embodiments are not limited thereto. As another example, a vector ***t***₁ may be referred to as upper bits of the public key vector **t,** and a vector ***t***₀ may be referred to as lower bits of the public key vector **t,** but embodiments are not limited thereto.

During a Dilithium verification procedure, the vector **w** may be not known, and instead only the vector **w** - *c***s₂** + c***t***₀ may be known. For convenience of description, the vector **w** - *c***s₂** + c***t***₀ may be referred to herein as a verification vector. In addition, the vector **w** may be referred to as a first intermediate vector, the vector *c***s₂** may be referred to as a second intermediate vector, and the vector c***t***₀ may be referred to as a third intermediate vector.

Because the vector **w** may not be known during the verification procedure, when the signature is generated, the signing process may ensure that it is possible to calculate **w**₁ = HighBit*s_{q}*(**w**, 2*γ*₂) during the verification procedure given the verification vector **w** - *c***s₂** + c***t***₀. This may be done in two phases. First, the signing procedure may include checking whether Equation 6 below holds: ${HighBits}_{q} \left(w,2{γ}_{2}\right) = {HighBits}_{q} \left(w-c{s}_{2},2{γ}_{2}\right)$ Equation 6

If Equation 6 does not hold, the iteration of the signing procedure may fail, and a new iteration of the signing procedure may begin.

If Equation 6 does hold, the signing procedure may proceed to generate a hint vector **h,** which may be intended to enable HighBits*_{q}*(**w** - *c**s***₂, 2*γ*₂) to be retrieved based on HighBits*_{q}*(**w** - ***c*s₂** + **c*t*₀**, 2*γ*₂) during the verification procedure.

The hint vector **h** may be a sequence of binary values that indicate the locations where HighBits*_{q}*(**w** - *c**s***₂, 2*γ*₂) is different from HighBits*_{q}*(**w** - *c***s₂** *+ c****t*₀**, 2*γ*₂). For example, during the signing procedure, some implementations of Dilithium may use a hint generation procedure denoted MakeHint_{q}, that may include obtaining a first vector based on HighBits*_{q}*(**w** - *c**s***₂, 2*γ*₂), obtaining a second vector based on HighBits*_{q}*(**w** - *c***s₂** + *c****t*₀**, 2*γ*₂), and generating the hint vector **h** based on a comparison between the first vector and the second vector. In addition, a corresponding procedure denoted UseHint*_{q}* may be used during the verification procedure to recover the vector ***w***₁ (or a candidate vector ${w}_{1}^{′}$) using the hint vector **h.**

In order for the hint vector **h** to work (e.g., in order for the hint vector **h** to be valid), two requirements must be met with respect to the change in the upper bits as the result of subtracting *c****t*₀***.* According to a first requirement, at each location, the change must be by at most 1 mod (*q* - 1)/2*γ*₂. According to a second requirement, at each location, the direction of the change should be deducible from the value of **w** - *c***s₂** + c***t***₀ at this location.

Given these two requirements, if the hint vector **h** indicates that some location is changed, the verification procedure may be able to determine that it is changed by exactly a value of one ("1"), and to determine in which direction it is changed, which means that the verification procedure may be able to determine how to correct it. Thus, given **w** - *c***s₂** + c***t***₀ and the hint, the verification procedure may be able to calculate HighBits*_{q}*(**w** - *c**s***₂, 2*γ*₂), which may be equal to HighBits*_{q}*(**w**, 2*γ*₂) which may be the desired value.

The signing procedure may be a randomized or pseudo-randomized process that includes several tests, and may be rerun with different randomness until all tests pass. According to embodiments, one of the tests relates to the vector *c****t*₀***.* In some implementations of Dilithium, this particular test includes determining whether Equation 7 below holds: ${\left‖c{t}_{0}\right‖}_{∞} < {γ}_{2}$ Equation 7

If the answer is negative (e.g., if Equation 7 does not hold), the iteration may fail. If the test passes (e.g., if Equation 7 does hold), all locations for which HighBits*_{q}*(**w** - *c***s**₂ + *c****t*₀**, 2*γ*₂) is different than HighBits*_{q}*(**w** - *c**s***₂, 2*γ*₂) may be marked in the hint vector **h** with a value of one ("1").

According to embodiments, the hint vector **h** may typically be a sparse vector, and in order to save on the signature length, it may be compressed as follows: for each of the k hint 256-vectors, its weight may be specified in one byte, and all the indexes that have a value of one ("1") may be listed, each in one byte. In order to keep the signature length fixed, another test may be performed to count a number of times that the value of one ("1") appears in the hint vector **h**, and if this number exceeds some threshold, meaning the aforementioned compression will be too long, the iteration fails. In addition, two additional tests are performed during the signing procedure to assure that no information about the first private key vector **s**₁ and the second private key vector **s**₂ is leaked.

The condition of Equation 7 may be sufficient to ensure the first requirement discussed above, e.g., that Equation 8 below holds for all*i*: ${HighBits}_{q} \left({\left(w-c{s}_{2}+c{t}_{0}\right)}_{i},2{γ}_{2}\right) = {HighBits}_{q} \left({\left(w-c{s}_{2}\right)}_{i},2{γ}_{2}\right) \pm 1 mod \left(q-1\right) / 2 {γ}_{2}$ Equation 8

However, this is not a necessary condition, and another condition corresponding to Equation 9 below may also be sufficient (but still not necessary) ${\left‖c{t}_{0}\right‖}_{∞} < 2 {γ}_{2}$ Equation 9

As for the second requirement discussed above, in terms of limiting the infinity-norm of *c**t***₀, the condition of Equation 7 is sufficient, because the value *γ*₂ is the largest value the norm to which *c**t***₀ can be limited in order to meet the second requirement.

However, instead of simply limiting the infinity-norm of *c**t***₀, as in Equation 7 above, embodiments may relate to an improved test in which each of the coefficients of *c**t***₀ are tested independently, with respect to the corresponding coefficient in **w** - *c**s***₂. If such a test is used, then testing that the norm of every coefficient of *c**t***₀ is smaller or equal to *γ*₂ is not necessary also with respect to the second requirement. This is because, while a coefficient of *c**t***₀ may allow a coefficient of **w** - *c**s***₂ to be displaced too far for the hint to work, exactly how far it is displaced may depend on the initial value of the coefficient of **w** - *c**s***₂ (and in particular, on its lower bits). The infinity norm of a coefficient of *c**t***₀ can be larger than *γ*₂ without failing the hint, and only in the extreme case a coefficient of **w** - *c**s***₂ bounds the norm of the corresponding coefficient of *c**t***₀ by *γ*₂, and even then, this may only occur in one direction (*e.g.*, depending on the coefficient of **w** - *c**s***₂, the coefficient of *c**t***₀ needs be either greater than or equal to -*γ*₂, or less than or equal to *γ*₂).

According to embodiments, performing such a coordinate-wise test may pass two types of coefficients of *c**t***₀ that would fail the test described above (e.g., the test corresponding to Equation 7). The first type of coefficient includes coefficients that would not yield a value of one ("1") in the corresponding location in the hint, and second type of coefficient includes coefficients that would yield a value of one ("1") in the corresponding location in the hint, but are still correctable by the UseHint procedure described above. Accordingly, embodiments may provide a signing procedure which includes an improved test, instead of the test corresponding to Equation 7 above. An example of such an improved test is described below.

According to embodiments, for each index value i, the coefficients *r*_{0,*i*} and *r*_{1,*i*} may be calculated according to Equation 10 and Equation 11 below: ${r}_{0 , i} = {LowBits}_{q} \left({\left(w-c{s}_{2}+c{t}_{0}\right)}_{i}\right)$ Equation 10 ${r}_{1 , i} = {HighBits}_{q} \left({\left(w-c{s}_{2}+c{t}_{0}\right)}_{i}\right)$ Equation11

In addition, a value m (a rounding coefficient) may be calculated according to Equation 12 below: $m = \left(q-1\right) / α$ Equation 12 where *q* is a prime modulus and *α* is a coefficient that determines the granularity of rounding (e.g. how finely the coefficients are split between upper and lower parts).

According to embodiments, the improved test may include, for each *i*, determining whether one of two conditions is satisfied. The first condition may be satisfied based on determining that Equation 13 holds: ${r}_{0 , i} > 0 and - {γ}_{2} < {r}_{0 , i} - {\left(c{t}_{0}\right)}_{i} \leq 3 {γ}_{2}$ Equation 13

The first condition may also be satisfied based on determining that Equation 14 holds: ${r}_{1 , i} = m - 1 ; {r}_{0 , i} > 0 ; {r}_{0 , i} - {\left(c{t}_{0}\right)}_{i} = 3 {γ}_{2} + 1$ Equation 14

The second condition may be satisfied based on determining that Equation 15 holds: ${r}_{0 , i} \leq 0 and - 3 {γ}_{2} < {r}_{0 , i} - {\left(c{t}_{0}\right)}_{i} \leq {γ}_{2}$ Equation 15

The second condition may also be satisfied based on determining that Equation 16 holds: ${r}_{1 , i} = m - 1 ; {r}_{0 , i} \leq 0 ; and {r}_{0 , i} - {\left(c{t}_{0}\right)}_{i} = - {γ}_{2} - 1$ Equation 16

The test may be passed based on at least one of the two conditions being satisfied. According to embodiments, the allowed range for the coefficients of *c**t***₀ may be doubled in comparison with the test corresponding to Equation 7 above. In addition, the test corresponding to Equations 13-16 may cause some indexes of the hint vector **h** to change from a value of zero ("0") to a value of one ("1"), but the probability for the test to fail due to the Hamming weight of the hint may be lower. This is because in such indexes (that have a value of one ("1") in the improved test a value of zero ("0") in the test corresponding to Equation 7), the norm of *c**t***₀ is larger than *γ*₂, and would thus anyway fail the test corresponding to Equation 7. The improved test corresponding to Equations 13-16 may allow hint vectors **h** to pass which include fewer indexes than the maximum allowed with a value of one ("1"), and which pass the test corresponding to Equation 7, and then also which include an extra few indexes with a larger norm, such that the overall Hamming weight of the hint is still within the bound.

The improved test may not require any other changes in the Dilithium procedures. In particular, the MakeHint and UseHint procedures of Dilithium may operate properly. The description below provides an example proof for the validity of the improved test.

Let $r , z ∈ {ℤ}_{q}$ (e.g. where ${ℤ}_{q}$ refers to the finite field of integers modulo *q*), and determine *r*₀ and *r*₁ according to Equation 17 and Equation 18 below: ${r}_{0} = {LowBits}_{q} \left(r, α\right)$ Equation 17 ${r}_{1} = {HighBits}_{q} \left(r, α\right)$ Equation 18

Suppose a first condition or a second condition is satisfied. The first condition may be satisfied when Equation 19 holds, or when Equation 20 holds. The second condition may be satisfied when Equation 21 holds, or when Equation 22 holds. ${r}_{0} > 0 and - α / 2 < {r}_{0} + z \leq 3 α / 2$ Equation 19 $\left.{r}_{1}=m-1 ; {r}_{0}>0 ; and {r}_{0}+z=3α/2+1\right)$ Equation 20

The second condition may be satisfied when Equation 21 holds, or when Equation 22 holds. ${r}_{0} \leq 0 and - 3 α / 2 < {r}_{0} + z \leq α / 2$ Equation 21 ${r}_{1} = 0 ; {r}_{0} \leq 0 ; and {r}_{0} + z = - 3 α / 2$ Equation 22

Denote *m* according to Equation 12 above. The conditions corresponding to Equations 19-22 may be rephrased as three mutually exclusive conditions, which may be referred to as Condition A, Condition B, and Condition C.

Condition A may correspond to Equation 23 or Equation 24. $- α / 2 < {r}_{0} + z \leq α / 2 and {r}_{1} = 0$ Equation 23 ${r}_{0} + z = - α / 2$ Equation 24

Condition B may correspond to Equation 25, or Equation 26. ${r}_{0} > 0 ; α / 2 < {r}_{0} + z \leq 3 α / 2 ; and {r}_{1} = m - 1$ Equation 25 ${r}_{0} > 0 and {r}_{0} + z = 3 α / 2 + 1$ Equation 26

Condition C may correspond to Equation 27, or Equation 28. ${r}_{0} \leq 0 and - 3 α / 2 < {r}_{0} + z \leq - α / 2$ Equation 27 ${r}_{1} = 1 , {r}_{0} \leq 0 and {r}_{0} + z = - 3 α / 2 + 1$ Equation 28

Note that for any *r*, *r*₀ and *r*₁ defined as above, then *r* = *r*₁*α* + *r*₀ holds with 0 ≤ *r*₁ < *m* and -*α*/2 < *r*₀ ≤ *α*/2 or with *r*₁ = 0 *and r*₀ = -*α*/2, and this decomposition is unique.

If condition A is met, then *r + z = r*₁*α + r*₀ + *z* where 0 ≤ *r*₁ < *m*, and from the condition -*α*/2 *< r*₀ *+ z* ≤ *α*/2 and *r*₁ = 0 or *r*₀ + *z* = -*α*/2. It follows that *HighBitsq*(*r + z, α*) *= r*₁ *= HighBitsq*(*r, α*)*.* Thus, MakeHint*_{q}*(*r*, *z*, *α*) will output *h =* 0, and UseHint*_{q}*(*h*, *r*, *α*) will output *r*₁ as required.

If condition B is met, then *r* + *z = r*₁*α + r*₀ *+ z =* (*r*₁ *+* 1)*α + r*₀ *+ z - α* with *r*₀ > 0 and -*α*/2 *< r*₀ *+ z - α* ≤ *α*/2 and *r*₁ + 1 = *m*, (or *r*₀ > 0 and *r*₀ + *z* - *α = α*/2 + 1). It follows that HighBits*_{q}*(*r + z, α*) = *r*₁ + 1( mod *m*) ≠ *r =* HighBits*_{q}*(*r*, *α*)*.* Thus, MakeHint*_{q}*(*r*, *z*, *α*) will output *h* = 1, and because *r*₀ > 0, UseHint*_{q}*(*h, r, α*) will output *r*₁ + 1 mod m as required.

If condition C is met, then *r* + *z = r*₁*α + r*₀ *+ z =* (*r*₁ - 1)*α + r*₀ + *z* + *α* with *r*₀ ≤ 0 and -*α*/2 *< r*₀ *+ z + α* ≤ *α*/2 (or *r*₁ - 1 = 0, *r*₀ ≤ 0 and *r*₀ *+ z + α =* -*α*/2 + 1). It follows that HighBits*_{q}*(*r* + *z, α*) = *r*₁ - 1( mod *m*) ≠ *r =* HighBits*_{q}*(*r, α*)*.* Thus, MakeHint*_{q}*(*r, z, α*) will output *h* = 1, and since *r*₀ ≤ 0 UseHint*_{q}*(*h, r, α*) will output *r*₁ - 1 mod *m* as required.

According to embodiments, the improved test may have no impact on the security of the algorithm compared to the test corresponding to Equation 7. Regarding potential leakage of information, like the test corresponding to Equation 7, the improved test may leak information about *c**t***₀, but this value is not secret. The improved test may also leak some information about **w** *- c**s***₂, but the test corresponding to Equation 7 ensures that knowing even the exact value of **w** *- c**s***₂ does not leak any information about *c**s***₂*.* In addition, because the verification process is unchanged, the difficulty for a potential forger stays the same.

In Dilithium, there is an inherent tradeoff between the length of the public key, and the length and runtime of the signature. Compressing the public key more (e.g., reducing more bits from the vector ***t***) means the magnitude of ***t***₀, and thus of *c**t***₀, increases. In particular, every extra bit that is reduced from the coefficients of t scales the distribution of the coefficients of *c**t***₀ by a factor of two ("2"). This may have two consequences: the test corresponding to Equation 7 may fail with higher probability, and the Hamming weight of the hint vector **h** may increase. The improved test affects only the first consequence: the improved test affects fails with lower probability, but weight of the hint vector **h** is unchanged (e.g., iterations that pass the improved test and the test corresponding to Equation 7 may generate exactly the same hint vector **h**).

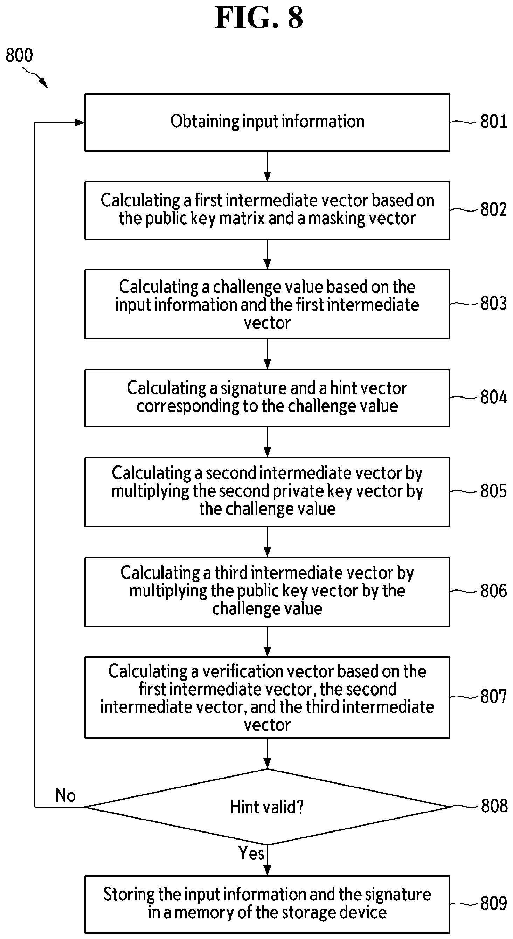

FIG. 8 is a flowchart of a process 700 of controlling a storage device, according to embodiments. In some implementations, one or more process blocks of FIG. 8 may be performed by the SSD 7210, the SSD controller 7220, the security module 7230, or any other element described above with reference to FIGs. 1-7.

As shown in FIG. 8, at operation 801 the process 800 may include obtaining input information (e.g. a message) to be signed using a public key associated with a private key. In embodiments, the input information may correspond to the message described above. In addition, the public key may corresponds to the public key matrix **A** and the public key vector **t**₀, and the private key may correspond to the first private key vector **s**₁ and the second private key vector **s**₂ described above.

As further shown in FIG. 8, at operation 802 the process 800 may include calculating a first intermediate vector based on the public key matrix and a masking vector. In embodiments, the first intermediate vector may correspond to the vector **w,** and the masking vector may correspond to the masking vector **y** described above. The masking vector **y** may be sampled from a distribution (e.g. a uniform distribution).

As further shown in FIG. 8, at operation 803 the process 800 may include calculating a challenge value based on the input information and the first intermediate vector. In embodiments, the challenge value may correspond to the challenge value *c* described above. The challenge value *c* may be computed using the Dilithium signature generation process. For instance, the challenge value *c* may be computed by calculating a hash based on the first intermediate vector and the input information. For instance, the challenge value may be calculated by: $c = H \left(tr\left(w\right),M\right)$ where *H*() is a hash function (such as SHAKE-256), tr(*w*) is a compressed or truncated version of the first intermediate vector ***w***, and ***M*** is the input information. For instance, tr(***w***) may be the higher order bits of the coefficients of the first intermediate vector ***w***, ***w***₁.

As further shown in FIG. 8, at operation 804 the process 800 may include calculating a signature vector and a hint vector corresponding to the challenge value. In embodiments, the signature vector may correspond to the signature vector **z** and a hint vector may correspond to the hint vector **h** described above. The signature vector **z** may be calculated using the Dilithium signature generation process. The signature vector **z** may be calculated by:

*z* = ***y*** + *c**s***₁ As further shown in FIG. 8, at operation 805 the process 800 may include calculating a second intermediate vector by multiplying the second private key vector **s**₂ by the challenge value. In embodiments, the second intermediate vector may correspond to the vector *c***s**₂ described above.

As further shown in FIG. 8, at operation 806 the process 800 may include calculating a third intermediate vector by multiplying the public key vector by the challenge value. In embodiments, the third intermediate vector may correspond to the vector *c***t**₀ described above.

As further shown in FIG. 8, at operation 807 the process 800 may include calculating a verification vector based on the first intermediate vector, the second intermediate vector, and the third intermediate vector. In embodiments, the verification vector may correspond to the vector **w** - c**s**₂ + c**t**₀ described above. Accordingly, the verification vector may be calculated by subtracting the second intermediate vector from the first intermediate vector and adding the third intermediate vector.

As further shown in FIG. 8, at operation 808 the process 800 may include determining whether the hint vector is valid based on a plurality of difference values obtained by subtracting a plurality of first coefficients included in the third intermediate vector from a plurality of second coefficients included in the verification vector. In embodiments, the plurality of difference values may correspond to the values *r*_{0,}*ᵢ -* (*c**t***₀)*ᵢ* described above. That is, the *i*^{th} difference value *diffᵢ = r*_{0,}*ᵢ -* (*c**t***₀)*ᵢ* where *r*_{0,*i*} is the *i*^{th} second coefficient from the verification vector and (*c**t***₀)*ᵢ* is the *i*^{th} first coefficient from the third intermediate vector *c**t***₀*. r*_{0,*i*} may be the lower bits from the *i*^{th} verification coefficient. Based on determining that the hint is not valid (N at operation 808), the process 800 may return to operation 801, and proceed with a next iteration. Based on determining that the hint is valid (Y at operation 808), the process 800 may proceed to operation 809.

As further shown in FIG. 8, at operation 809 the process 800 may include, based on determining that the hint vector is valid, storing the input information and a signature corresponding to the signature vector and the challenge value in a memory of the storage device. In embodiments, the signature may correspond to the signature *σ* discussed above.

In embodiments, the public key and the private key may be generated according to the CRYSTALS-Dilithium digital signature scheme.

In embodiments, the hint may be determined to be valid based on one or more conditions corresponding to Equations 13-16.

Although FIG. 8 shows example blocks of process 800, in some implementations, the process 800 may include additional blocks, fewer blocks, different blocks, or differently arranged blocks than those depicted in FIG. 8. Additionally, or alternatively, two or more of the blocks of the process 800 may be arranged or combined in any order, or performed in parallel.

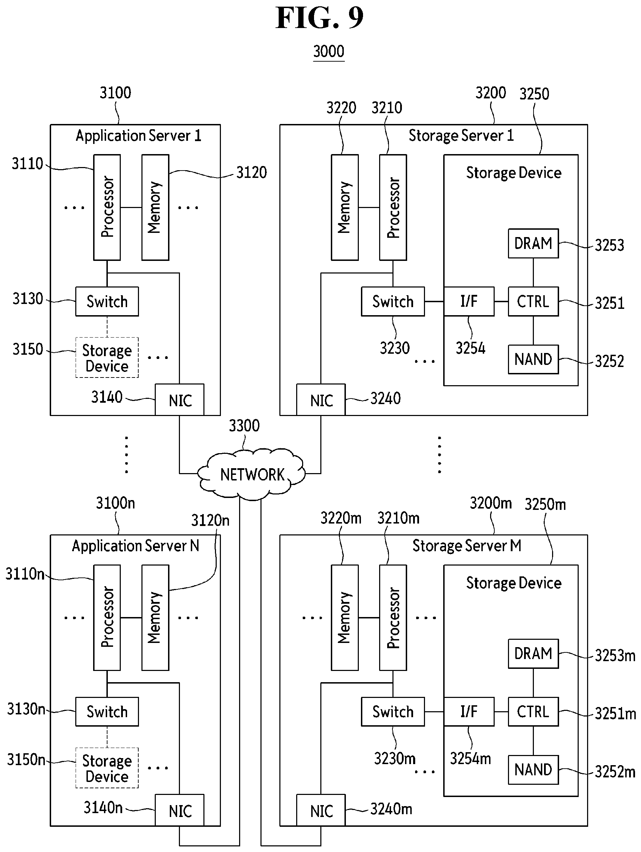

FIG. 9 is a diagram of a data center 3000 to which a memory device is applied, according to embodiments.

Referring to FIG. 9, the data center 3000 may be a facility that collects various types of pieces of data and provides services and be referred to as a data storage center. The data center 3000 may be a system for operating a search engine and a database, and may be a computing system used by companies, such as banks, or government agencies. The data center 3000 may include application servers 3100 to 3100n and storage servers 3200 to 3200m. The number of application servers 3100 to 3100n and the number of storage servers 3200 to 3200m may be variously selected according to embodiments. The number of application servers 3100 to 3100n may be different from the number of storage servers 3200 to 3200m.

The application server 3100 or the storage server 3200 may include at least one of processors 3110 and 3210 and memories 3120 and 3220. The storage server 3200 will now be described as an example. The processor 3210 may control all operations of the storage server 3200, access the memory 3220, and execute instructions and/or data loaded in the memory 3220. The memory 3220 may be a double-data-rate synchronous DRAM (DDR SDRAM), a high-bandwidth memory (HBM), a hybrid memory cube (HMC), a dual in-line memory module (DIMM), Optane DIMM, and/or a non-volatile DIMM (NVMDIMM). In some embodiments, the numbers of processors 3210 and memories 3220 included in the storage server 3200 may be variously selected. In embodiments, the processor 3210 and the memory 3220 may provide a processor-memory pair. In embodiments, the number of processors 3210 may be different from the number of memories 3220. The processor 3210 may include a single-core processor or a multi-core processor. The above description of the storage server 3200 may be similarly applied to the application server 3100. In some embodiments, the application server 3100 may not include a storage device 3150. The storage server 3200 may include at least one storage device 3250. The number of storage devices 3250 included in the storage server 3200 may be variously selected according to embodiments.

The application servers 3100 to 3100n may communicate with the storage servers 3200 to 3200m through a network 3300. The network 3300 may be implemented by using a fiber channel (FC) or Ethernet. In this case, the FC may be a medium used for relatively high-speed data transmission and use an optical switch with high performance and high availability. The storage servers 3200 to 3200m may be provided as file storages, block storages, or object storages according to an access method of the network 3300.

In embodiments, the network 3300 may be a storage-dedicated network, such as a storage area network (SAN). For example, the SAN may be an FC-SAN, which uses an FC network and is implemented according to an FC protocol (FCP). As another example, the SAN may be an Internet protocol (IP)-SAN, which uses a transmission control protocol (TCP)/IP network and is implemented according to a SCSI over TCP/IP or Internet SCSI (iSCSI) protocol. In another embodiment, the network 3300 may be a general network, such as a TCP/IP network. For example, the network 3300 may be implemented according to a protocol, such as FC over Ethernet (FCoE), network attached storage (NAS), and NVMe over Fabrics (NVMe-oF).

Hereinafter, the application server 3100 and the storage server 3200 will mainly be described. A description of the application server 3100 may be applied to another application server 3100n, and a description of the storage server 3200 may be applied to another storage server 3200m.

The application server 3100 may store data, which is requested by a user or a client to be stored, in one of the storage servers 3200 to 3200m through the network 3300. Also, the application server 3100 may obtain data, which is requested by the user or the client to be read, from one of the storage servers 3200 to 3200m through the network 3300. For example, the application server 3100 may be implemented as a web server or a database management system (DBMS).

The application server 3100 may access a memory 3120n or a storage device 3150n, which is included in another application server 3100n, through the network 3300. Alternatively, the application server 3100 may access memories 3220 to 3220m or storage devices 3250 to 3250m, which are included in the storage servers 3200 to 3200m, through the network 3300. Thus, the application server 3100 may perform various operations on data stored in application servers 3100 to 3100n and/or the storage servers 3200 to 3200m. For example, the application server 3100 may execute an instruction for moving or copying data between the application servers 3100 to 3100n and/or the storage servers 3200 to 3200m. In this case, the data may be moved from the storage devices 3250 to 3250m of the storage servers 3200 to 3200m to the memories 3120 to 3120n of the application servers 3100 to 3100n directly or through the memories 3220 to 3220m of the storage servers 3200 to 3200m. The data moved through the network 3300 may be data encrypted for security or privacy.

The storage server 3200 will now be described as an example. An interface 3254 may provide physical connection between a processor 3210 and a controller 3251 and a physical connection between a network interface card (NIC) 3240 and the controller 3251. For example, the interface 3254 may be implemented using a direct attached storage (DAS) scheme in which the storage device 3250 is directly connected with a dedicated cable. For example, the interface 3254 may be implemented by using various interface schemes, such as ATA, SATA, e-SATA, an SCSI, SAS, PCI, PCIe, NVMe, IEEE 1394, a USB interface, an SD card interface, an MMC interface, an eMMC interface, a UFS interface, an eUFS interface, and/or a CF card interface.

The storage server 3200 may further include a switch 3230 and the NIC(Network InterConnect) 3240. The switch 3230 may selectively connect the processor 3210 to the storage device 3250 or selectively connect the NIC 3240 to the storage device 3250 via the control of the processor 3210.

In embodiments, the NIC 3240 may include a network interface card and a network adaptor. The NIC 3240 may be connected to the network 3300 by a wired interface, a wireless interface, a Bluetooth interface, or an optical interface. The NIC 3240 may include an internal memory, a digital signal processor (DSP), and a host bus interface and be connected to the processor 3210 and/or the switch 3230 through the host bus interface. The host bus interface may be implemented as one of the above-described examples of the interface 3254. In embodiments, the NIC 3240 may be integrated with at least one of the processor 3210, the switch 3230, and the storage device 3250.

In the storage servers 3200 to 3200m or the application servers 3100 to 3100n, a processor may transmit a command to storage devices 3150 to 3150n and 3250 to 3250m or the memories 3120 to 3120n and 3220 to 3220m and program or read data. In this case, the data may be data of which an error is corrected by an ECC engine. The data may be data on which a data bus inversion (DBI) operation or a data masking (DM) operation is performed, and may include cyclic redundancy code (CRC) information. The data may be data encrypted for security or privacy.

Storage devices 3150 to 3150n and 3250 to 3250m may transmit a control signal and a command/address signal to NAND flash memory devices 3252 to 3252m in response to a read command received from the processor. Thus, when data is read from the NAND flash memory devices 3252 to 3252m, a read enable (RE) signal may be input as a data output control signal, and thus, the data may be output to a DQ bus. A data strobe signal DQS may be generated using the RE signal. The command and the address signal may be latched in a page buffer depending on a rising edge or falling edge of a write enable (WE) signal.

The controller 3251 may control all operations of the storage device 3250. In embodiments, the controller 3251 may include SRAM. The controller 3251 may write data to the NAND flash memory device 3252 in response to a write command or read data from the NAND flash memory device 3252 in response to a read command. For example, the write command and/or the read command may be provided from the processor 3210 of the storage server 3200, the processor 3210m of another storage server 3200m, or the processors 3110 and 3110n of the application servers 3100 and 3100n. DRAM 3253 may temporarily store (or buffer) data to be written to the NAND flash memory device 3252 or data read from the NAND flash memory device 3252. Also, the DRAM 3253 may store metadata. Here, the metadata may be user data or data generated by the controller 3251 to manage the NAND flash memory device 3252. The storage device 3250 may include a secure element (SE) for security or privacy.

As is traditional in the field, the embodiments are described, and illustrated in the drawings, in terms of functional blocks, units and/or modules. Those skilled in the art will appreciate that these blocks, units and/or modules are physically implemented by electronic (or optical) circuits such as logic circuits, discrete components, microprocessors, hard-wired circuits, memory elements, wiring connections, and the like, which may be formed using semiconductor-based fabrication techniques or other manufacturing technologies. In the case of the blocks, units and/or modules being implemented by microprocessors or similar, they may be programmed using software (e.g., microcode) to perform various functions discussed herein and may optionally be driven by firmware and/or software. Alternatively, each block, unit and/or module may be implemented by dedicated hardware, or as a combination of dedicated hardware to perform some functions and a processor (e.g., one or more programmed microprocessors and associated circuitry) to perform other functions. Also, each block, unit and/or module of the embodiments may be physically separated into two or more interacting and discrete blocks, units and/or modules without departing from the present scope. Further, the blocks, units and/or modules of the embodiments may be physically combined into more complex blocks, units and/or modules without departing from the present scope.

The various operations of methods described above may be performed by any suitable means capable of performing the operations, such as various hardware and/or software component(s), circuits, and/or module(s).

The software may include an ordered listing of executable instructions for implementing logical functions, and can be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Embodiments are set out in the following Clauses:
Clause 1. A storage device, comprising:
   a memory; and
   a storage controller comprising a security module,
   wherein the storage controller is configured to:
      obtain input information to be signed using a public key associated with a private key, wherein the public key corresponds to a public key matrix and a public key vector, and wherein the private key corresponds to a first private key vector and a second private key vector;
      calculate a first intermediate vector based on the public key matrix and a masking vector;
      calculate a challenge value based on the input information and the first intermediate vector;
      calculate a signature vector and a hint vector corresponding to the challenge value;
      calculate a second intermediate vector by multiplying the second private key vector by the challenge value,
      calculate a third intermediate vector by multiplying the public key vector by the challenge value,
      calculate a verification vector based on the first intermediate vector, the second intermediate vector, and the third intermediate vector,
      determine whether the hint vector is valid based on a plurality of difference values obtained by subtracting a plurality of first coefficients included in the third intermediate vector from a plurality of second coefficients included in the verification vector, and
      based on determining that the hint vector is valid, store the input information and a signature corresponding to the signature vector and the challenge value in the memory.
Clause 2. The storage device of Clause 1, wherein the public key and the private key are generated according to a Cryptographic Suite for Algebraic Lattices (CRYSTALS)-Dilithium digital signature scheme.
Clause 3. The storage device of Clause 1 or Clause 2, wherein the verification vector comprises a plurality of verification coefficients, and
   wherein each verification coefficient from among the plurality of verification coefficients comprises upper bits and lower bits, wherein an order of the upper bits is higher than an order of the lower bits, and
   wherein the plurality of second coefficients correspond to the lower bits.
Clause 4. The storage device of Clause 3, wherein the hint vector is determined to be valid based on a following condition being satisfied for each second coefficient from among the plurality of second coefficients: ${r}_{0 , i} > 0 ,$ and $- {γ}_{2} < {diff}_{i} \leq 3 {γ}_{2} ,$ where i denotes an index value, *r*_{0,*i*} denotes the lower bits of a verification coefficient corresponding to the index value from among the plurality of verification coefficients, *diffᵢ* denotes a difference value corresponding to the index value from among the plurality of difference values, and *γ*₂ denotes a threshold value.
Clause 5. The storage device of Clause 3 or Clause 4, wherein the hint vector is determined to be valid based on a following condition being satisfied for each second coefficient from among the plurality of second coefficients: ${r}_{0 , i} \leq 0 ,$ and $- 3 {γ}_{2} < {diff}_{i} \leq {γ}_{2} ,$ where *i* denotes an index value, *r*_{0,*i*} denotes the lower bits of a verification coefficient corresponding to the index value from among the plurality of verification coefficients, *diffᵢ* denotes a difference value corresponding to the index value from among the plurality of difference values, and *γ*₂ denotes a threshold value.
Clause 5. The storage device of any of Clauses 3-5, wherein the hint vector is determined to be valid based on a following condition being satisfied for each second coefficient from among the plurality of second coefficients: ${r}_{1 , i} = m - 1 ,$ ${r}_{0 , i} > 0 ,$ and ${diff}_{i} = 3 {γ}_{2} + 1$ where i denotes an index value, *r*_{0,*i*} denotes the upper bits of a verification coefficient corresponding to the index value from among the plurality of verification coefficients, *diffᵢ* denotes a difference value corresponding to the index value from among the plurality of difference values, *γ*₂ denotes a threshold value, and *m* denotes a rounding coefficient associated with a digital signature scheme corresponding to the public key and the private key.
Clause 6. The storage device of any of Clauses 3-6, wherein the hint vector is determined to be valid based on a following condition being satisfied for each second coefficient from among the plurality of second coefficients: ${r}_{1 , i} = m - 1 ,$ ${r}_{0 , i} \leq 0 ,$ and ${diff}_{i} = - {γ}_{2} - 1 ,$ where *i* denotes an index value, *r*_{0,*i*} denotes the lower bits of a verification coefficient corresponding to the index value from among the plurality of verification coefficients, *diffᵢ* denotes a difference value corresponding to the index value from among the plurality of difference values, and *γ*₂ denotes a threshold value, and *m* denotes a rounding coefficient associated with an a digital signature scheme corresponding to the public key and the private key.
Clause 7. The storage device of any preceding Clause, wherein the storage controller is further configured to:
   based on determining that the hint vector is not valid, generate a new challenge value corresponding to the input information;
   calculate a new signature vector and a new hint vector based on the new challenge value;
   determine whether the new hint vector is valid; and
   based on determining that the new hint vector is valid, store the input information and a new signature corresponding to the new signature vector and the new challenge value in the memory.
Clause 8. A storage system, comprising:
   a host device; and
   a storage device comprising a memory and a storage controller that includes a security module,
   wherein the storage controller is configured to:
      obtain input information to be signed using a public key associated with a private key, wherein the public key corresponds to a public key matrix and a public key vector, and wherein the private key corresponds to a first private key vector and a second private key vector;
      calculate a first intermediate vector based on the public key matrix and a masking vector;
      calculate a challenge value based on the input information and the first intermediate vector;
      calculate a signature vector and a hint vector corresponding to the challenge value;
      calculate a second intermediate vector by multiplying the second private key vector by the challenge value,
      calculate a third intermediate vector by multiplying the public key vector by the challenge value,
      calculate a verification vector based on the first intermediate vector, the second intermediate vector, and the third intermediate vector,
      determine whether the hint vector is valid based on a plurality of difference values obtained by subtracting a plurality of first coefficients included in the third intermediate vector from a plurality of second coefficients included in the verification vector, and
      based on determining that the hint vector is valid, store the input information and a signature corresponding to the signature vector and the challenge value in the memory.
Clause 9. The storage system of Clause 8, wherein the public key and the private key are generated according to a Cryptographic Suite for Algebraic Lattices (CRYSTALS)-Dilithium digital signature scheme,
   wherein the verification vector comprises a plurality of verification coefficients, and
   wherein each verification coefficient from among the plurality of verification coefficients comprises upper bits and lower bits, wherein an order of the upper bits is higher than an order of the lower bits, and
   wherein the plurality of second coefficients correspond to the lower bits.
Clause 10. The storage system of Clause 9, wherein the hint vector is determined to be valid based on at least one of a first condition and a second condition being satisfied for each second coefficient from among the plurality of second coefficients,
   wherein the first condition is represented as follows: ${r}_{0 , i} > 0 ,$ and $- {γ}_{2} < {diff}_{i} \leq 3 {γ}_{2} ,$
   wherein the second condition is represented as follows: ${r}_{0 , i} \leq 0 ,$ *and* $- 3 {γ}_{2} < {diff}_{i} \leq {γ}_{2} ,$
   where *i* denotes an index value, *r*_{0,*i*} denotes the lower bits of a verification coefficient corresponding to the index value from among the plurality of verification coefficients, *diffᵢ* denotes a difference value corresponding to the index value from among the plurality of difference values, and *γ*₂ denotes a threshold value.
Clause 11. The storage system of Clause 9 or Clause 10, wherein the hint vector is determined to be valid based on at least one of a first condition and a second condition being satisfied for each second coefficient from among the plurality of second coefficients,
   wherein the first condition is represented as follows: ${r}_{1 , i} = m - 1 ,$ ${r}_{0 , i} > 0 ,$ and ${diff}_{i} = 3 {γ}_{2} + 1 ,$
   wherein the second condition is represented as follows: ${r}_{1 , i} = m - 1 ,$ ${r}_{0 , i} \leq 0 ,$ and ${diff}_{i} = - {γ}_{2} - 1 ,$
   where *i* denotes an index value, *r*_{0,*i*} denotes the lower bits of a verification coefficient corresponding to the index value from among the plurality of verification coefficients, *diffᵢ* denotes a difference value corresponding to the index value from among the plurality of difference values, and *γ*₂ denotes a threshold value, and *m* denotes a rounding coefficient associated with the CRYSTALS-Dilithium digital signature scheme.

The foregoing is illustrative of the embodiments and is not to be construed as limiting thereof. Although a few embodiments have been described, those skilled in the art will readily appreciate that many modifications are possible in the embodiments without materially departing from the present scope.

## Claims

1. A method of controlling a storage device, the method comprising:
obtaining (801) input information to be signed using a public key associated with a private key, wherein the public key corresponds to a public key matrix and a public key vector, and wherein the private key corresponds to a first private key vector and a second private key vector;
calculating (802) a first intermediate vector based on the public key matrix and a masking vector;
calculating (803) a challenge value based on the input information and the first intermediate vector;
calculating (804) a signature vector and a hint vector corresponding to the challenge value;
calculating (805) a second intermediate vector by multiplying the second private key vector by the challenge value;
calculating (806) a third intermediate vector by multiplying the public key vector by the challenge value;
calculating (807) a verification vector based on the first intermediate vector, the second intermediate vector, and the third intermediate vector;
determining (808) whether the hint vector is valid based on a plurality of difference values obtained by subtracting a plurality of first coefficients included in the third intermediate vector from a plurality of second coefficients included in the verification vector; and
based on determining that the hint vector is valid, storing (809) the input information and a signature corresponding to the signature vector and the challenge value in a memory of the storage device.

2. The method of claim 1, wherein the public key and the private key are generated according to a Cryptographic Suite for Algebraic Lattices Dilithium digital signature scheme.

3. The method of claim 1 or claim 2, wherein the verification vector comprises a plurality of verification coefficients, and
wherein each verification coefficient from among the plurality of verification coefficients comprises upper bits and lower bits, wherein an order of the upper bits is higher than an order of the lower bits, and
wherein the plurality of second coefficients correspond to the lower bits.

4. The method of claim 3, wherein the hint vector is determined to be valid based on a following condition being satisfied for each second coefficient from among the plurality of second coefficients: ${r}_{0 , i} > 0 ,$ and $- {γ}_{2} < {diff}_{i} \leq 3 {γ}_{2} ,$ where *i* denotes an index value, *r*_{0,*i*} denotes the lower bits of a verification coefficient corresponding to the index value from among the plurality of verification coefficients, *diffᵢ* denotes a difference value corresponding to the index value from among the plurality of difference values, and *γ*₂ denotes a threshold value.

5. The method of claim 3 or claim 4, wherein the hint vector is determined to be valid based on a following condition being satisfied for each second coefficient from among the plurality of second coefficients: ${r}_{0 , i} \leq 0 ,$ and $- 3 {γ}_{2} < {diff}_{i} \leq {γ}_{2} ,$ where *i* denotes an index value, *r*_{0,*i*} denotes the lower bits of a verification coefficient corresponding to the index value from among the plurality of verification coefficients, *diffᵢ* denotes a difference value corresponding to the index value from among the plurality of difference values, and *γ*₂ denotes a threshold value.

6. The method of any of claims 3-5, wherein the hint vector is determined to be valid based on a following condition being satisfied for each second coefficient from among the plurality of second coefficients: ${r}_{1 , i} = m - 1 ,$ ${r}_{0 , i} > 0 ,$ and ${diff}_{i} = 3 {γ}_{2} + 1 ,$ where *i* denotes an index value, *r*_{0,*i*} denotes the lower bits of a verification coefficient corresponding to the index value from among the plurality of verification coefficients, *r*_{1,*i*} denotes the upper bits of the verification coefficient corresponding to the index value from among the plurality of verification coefficients, *diffᵢ* denotes a difference value corresponding to the index value from among the plurality of difference values, *γ*₂ denotes a threshold value, and m denotes a rounding coefficient associated with a digital signature scheme corresponding to the public key and the private key.

7. The method of any of claims 3-6, wherein the hint vector is determined to be valid based on a following condition being satisfied for each second coefficient from among the plurality of second coefficients: ${r}_{1 , i} = m - 1 ,$ ${r}_{0 , i} \leq 0 ,$ and ${diff}_{i} = - {γ}_{2} - 1 ,$ where *i* denotes an index value, *r*_{0,*i*} denotes the lower bits of a verification coefficient corresponding to the index value from among the plurality of verification coefficients, *r*_{1,*i*} denotes the upper bits of the verification coefficient corresponding to the index value from among the plurality of verification coefficients, *diffᵢ* denotes a difference value corresponding to the index value from among the plurality of difference values, and *γ*₂ denotes a threshold value, and m denotes a rounding coefficient associated with a digital signature scheme corresponding to the public key and the private key.

8. The method of any preceding claim, further comprising:
based on determining that the hint vector is not valid, generating a new challenge value corresponding to the input information;
calculating a new signature vector and a new hint vector based on the new challenge value;
determining whether the new hint vector is valid; and
based on determining that the new hint vector is valid, storing the input information and a new signature corresponding to the new signature vector and the new challenge value in the memory of the storage device.

9. A storage device, comprising:
a memory; and
a storage controller (7220) comprising a security module (7230),
wherein the storage controller (7220) is configured to:
obtain (801) input information to be signed using a public key associated with a private key, wherein the public key corresponds to a public key matrix and a public key vector, and wherein the private key corresponds to a first private key vector and a second private key vector;
calculate (802) a first intermediate vector based on the public key matrix and a masking vector;
calculate (803) a challenge value based on the input information and the first intermediate vector;
calculate (804) a signature vector and a hint vector corresponding to the challenge value;
calculate (805) a second intermediate vector by multiplying the second private key vector by the challenge value,
calculate (806) a third intermediate vector by multiplying the public key vector by the challenge value,
calculate (807) a verification vector based on the first intermediate vector, the second intermediate vector, and the third intermediate vector,
determine (808) whether the hint vector is valid based on a plurality of difference values obtained by subtracting a plurality of first coefficients included in the third intermediate vector from a plurality of second coefficients included in the verification vector, and
based on determining that the hint vector is valid, store (809) the input information and a signature corresponding to the signature vector and the challenge value in the memory.

10. The storage device of claim 9, wherein the public key and the private key are generated according to a Cryptographic Suite for Algebraic Lattices Dilithium digital signature scheme.

11. The storage device of claim 9 or claim 10, wherein the verification vector comprises a plurality of verification coefficients, and
wherein each verification coefficient from among the plurality of verification coefficients comprises upper bits and lower bits, wherein an order of the upper bits is higher than an order of the lower bits, and
wherein the plurality of second coefficients correspond to the lower bits.

12. The storage device of claim 11, wherein the hint vector is determined to be valid based on a following condition being satisfied for each second coefficient from among the plurality of second coefficients: ${r}_{0 , i} > 0 ,$ and $- {γ}_{2} < {diff}_{i} \leq 3 {γ}_{2} ,$ where *i* denotes an index value, *r*_{0,*i*} denotes the lower bits of a verification coefficient corresponding to the index value from among the plurality of verification coefficients, *diffᵢ* denotes a difference value corresponding to the index value from among the plurality of difference values, and *γ*₂ denotes a threshold value.

13. The storage device of claim 11 or claim 12, wherein the hint vector is determined to be valid based on a following condition being satisfied for each second coefficient from among the plurality of second coefficients: ${r}_{0 , i} \leq 0 ,$ and $- 3 {γ}_{2} < {diff}_{i} \leq {γ}_{2} ,$ where *i* denotes an index value, *r*_{0,*i*} denotes the lower bits of a verification coefficient corresponding to the index value from among the plurality of verification coefficients, *diffᵢ* denotes a difference value corresponding to the index value from among the plurality of difference values, and *γ*₂ denotes a threshold value.

14. The storage device of any of claims 11-13, wherein the hint vector is determined to be valid based on a following condition being satisfied for each second coefficient from among the plurality of second coefficients: ${r}_{1 , i} = m - 1 ,$ ${r}_{0 , i} > 0 ,$ and ${diff}_{i} = 3 {γ}_{2} + 1$ where *i* denotes an index value, *r*_{0,*i*} denotes the lower bits of a verification coefficient corresponding to the index value from among the plurality of verification coefficients, *r*_{1,*i*} denotes the upper bits of the verification coefficient corresponding to the index value from among the plurality of verification coefficients, *diffᵢ* denotes a difference value corresponding to the index value from among the plurality of difference values, *γ*₂ denotes a threshold value, and m denotes a rounding coefficient associated with a digital signature scheme corresponding to the public key and the private key.

15. The storage device of any of claims 11-14, wherein the hint vector is determined to be valid based on a following condition being satisfied for each second coefficient from among the plurality of second coefficients: ${r}_{1 , i} = m - 1 ,$ ${r}_{0 , i} \leq 0 ,$ and ${diff}_{i} = - {γ}_{2} - 1 ,$ where *i* denotes an index value, *r*_{0,*i*} denotes the lower bits of a verification coefficient corresponding to the index value from among the plurality of verification coefficients, *r*_{1,*i*} denotes the upper bits of the verification coefficient corresponding to the index value from among the plurality of verification coefficients, *diffᵢ* denotes a difference value corresponding to the index value from among the plurality of difference values, and *γ*₂ denotes a threshold value, and *m* denotes a rounding coefficient associated with an a digital signature scheme corresponding to the public key and the private key.
